(19) Europäisches Patentamt

European Patent Office

Office européen des brevets

(11) EP 0 970 440 B1

(12) EUROPÄISCHE PATENTSCHRIFT

(45) Veröffentlichungstag und Bekanntmachung des Hinweises auf die Patenterteilung:
**17.04.2002  Patentblatt 2002/16**

(21) Anmeldenummer: 98928093.8

(22) Anmeldetag: **26.03.1998**

(51) Int Cl.⁷: **G06T 3/40**, H04N 1/40

(86) Internationale Anmeldenummer:
**PCT/DE98/00907**

(87) Internationale Veröffentlichungsnummer:
**WO 98/43207 (01.10.1998 Gazette 1998/39)**

(54) **BILDBEARBEITUNGSVERFAHREN UND SCHALTUNGSANORDNUNG ZUM VERÄNDERN DER BILDAUFLÖSUNG**

IMAGE PROCESSING METHOD AND CIRCUIT ARRANGEMENT FOR CHANGING IMAGE RESOLUTION

PROCEDE DE TRAITEMENT D'IMAGE ET CIRCUIT POUR MODIFIER LA RESOLUTION D'IMAGE

(84) Benannte Vertragsstaaten:
**BE DE FR GB**

(30) Priorität: **27.03.1997  DE 19713079**

(43) Veröffentlichungstag der Anmeldung:
**12.01.2000   Patentblatt 2000/02**

(73) Patentinhaber: **Océ Printing Systems GmbH**
**85586 Poing (DE)**

(72) Erfinder: **PETSCHIK, Benno**
**D-85570 Markt Schwaben (DE)**

(74) Vertreter: **Schaumburg, Thoenes & Thurn**
**Postfach 86 07 48**
**81634 München (DE)**

(56) Entgegenhaltungen:
**EP-A- 0 149 120          EP-A- 0 708 415**
**DE-A- 4 206 277**

- **"IMAGE SCALING WITH TWO-DIMENSIONAL MEMORY ARRAYS" IBM TDB, Bd. 34, Nr. 2, Juli 1991, Seiten 4-9, XP000210549**
- **PATENT ABSTRACTS OF JAPAN vol. 006, no. 182 (E-131), 18.September 1982 & JP 57 097271 A (RICOH CO LTD), 16.Juni 1982,**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Bearbeiten von Bilddaten, bei dem ein zu bearbeitendes Quellbild matrixförmig angeordnete Quellbildelemente enthält, denen jeweils ein Quellbilddatum zugeordnet ist, welches die Darstellung des jeweiligen Quellbildelementes festlegt. Bei der Bearbeitung entsteht ein Zielbild mit matrixförmig angeordneten Zielbildelementen. Jedem Zielbildelement ist ein Zielbilddatum zugeordnet, welches die Darstellung des jeweiligen Zielbildelementes festlegt.

Die Bildelemente sind im Fall eines Schwarz/Weiß-Druckers entweder schwarze Bildpunkte oder Bildpunkte mit der Farbe des Bildträgers. Ist der Bildträger z. B. weiß, so sind letztere weiße Bildpunkte. Zum Erzeugen des Druckbildes werden bei einem bekannten Drucker die Bildpunkte mit in einem vorgegebenen Abstand aneinandergereihten lichtabgebenden Elementen, z. B. Leuchtdioden (LED-light emitting diode), auf einem Fotoleiter erzeugt.

Die Auflösung des Druckers ist als die Anzahl von Bildelementen je Wegeinheit in Zeilenrichtung bzw. Spaltenrichtung eines Bildes definiert. Als Wegeinheit wird in der Drucktechnik üblicherweise eine Strecke von 25,4 mm gewählt (25,4 mm = 1 Inch). In diesem Fall ist die Einheit der Auflösung Bildpunkte je 25,4 mm, kurz dpi (dots per inch). Die Auflösung des Druckers mit aneinandergereihten Lichtquellen ist durch den Abstand dieser Lichtquellen zueinander fest vorgegeben, z. B. 600 dpi. Soll nun ein Quellbild mit einer Auflösung von z. B. 240 dpi oder 400 dpi gedruckt werden, so muß aus dem Quellbild erst ein Zielbild mit einer Auflösung von 600 dpi erzeugt werden. Dabei sollen im Zielbild die Bildinhalte des Quellbildes, wie z. B. horizontale Linien, vertikale Linien und geneigte Linien, aber auch Kreise oder ähnliches, möglichst unverfälscht dargestellt werden.

Das Erzeugen eines Zielbildes ist unkritisch, wenn die Auflösung des Zielbildes ein ganzzahliges Vielfaches der Auflösung des Quellbildes beträgt. In diesem Fall werden die Quellbildelemente vervielfacht und als Zielbildelemente verwendet. Ein solches Verfahren ist beispielsweise aus der EP 0 708 415 A2 bekannt.

Problematisch sind nicht ganzzahlige Verhältnisse, wie z. B. die oben angegebenen Umsetzungen von 240 dpi auf 600 dpi und von 400 dpi auf 600 dpi, da in diesen Fällen Entscheidungen bzw. Rechenoperationen erforderlich sind um Bildelemente im Zielbild nach vorbestimmten Regeln darzustellen. Dabei sind insbesondere Multiplikationen mit Faktoren ungleich einer Zweierpotenz sowie Rundungsoperationen etc. störend, da sie viel Rechenzeit benötigen. Die Rechenzeit fällt jedoch aufgrund der Vielzahl von Bildelementen in einem Bild, z. B. mehrere Millionen, besonders ins Gewicht.

Aus der DE 42 06 277 A1 ist ein Verfahren zur Umwandlung digitaler Bilddaten von einem 200 dpi-Quellraster in ein 300-dpi-Zielraster bekannt. Dabei werden jeweils 2x2 Bildpunkte im Quellraster zu 3x3 Bilpunkten im Zielraster umgesetzt, die Menge der Bilddaten also beträchtlich erhöht. Aus der EP 149 120 A2 ist ebenfalls ein Verfahren zum erweitern der Bilddaten bekannt. Bei beiden bekannten Verfahren werden Bilddaten in Abhängigkeit von den Werten der jeweiligen Nachbarbildpunkten eingefügt.

Bei der Umsetzung von Bilddaten von einem Quellraster einer ersten Auflösung in ein Zielraster einer zweiten Auflösung wird gefordert, daß Linien möglichst originalgetreu wiedergegeben werden. Insbesondere wird gefordert, daß die Linienbreiten erhalten bleiben. Diese Forderung kann das Verfahren der DE 42 06 277 A1 nicht zufriedenstellend erfüllen, weil dazu im 300 dpi-Raster halbe Linien dargestellt werden müßten. In einem digitalen System ist dies nicht möglich. Auch das aus der EP 149 120 A2 bekannte Verfahren gibt zu dieser Forderung keine zufriedenstellende Antwort.

Bei einer Umsetzung der Bilddaten um den Faktor 2,5 von einem 240 dpi Quellraster auf ein 600 dpi Zielraster führt die o.g. Forderung dazu, daß eine Linie der Breite eines Dots im 240 dpi-Raster in eine Linie der Breite 2,5 Dots im 600 dpi-Raster umgesetzt werden muß. Da sich halbe Linienbreiten in einem binären System nicht darstellen lassen, werden solche Linien häufig im Zielraster verfälscht dargestellt.

Aus dem Artikel "Image scaling with two-dimensional memory arrays", IBM Technical Disclosure Bulletin, Vol. 34, No. 2, July 1991, Seiten 4-9, XP 000210549 sind ein Verfahren und eine Schaltung zur Skalierung von Bilddaten bekannt. Die Schaltung ist für bestimmte Bildverarbeitungsoperationen optimiert und kann ihre Operationen unabhängig von einem Systemprozessor ausführen. Die Skalierung erfolgt, indem Bildzeilen oder Bildspalten wiederholt oder gelöscht werden. Dieses Verfahren ist jedoch hinsichtlich der originalgetreuen Wiedergabe von Linien, insbesondere bei der Umsetzung dünner Linien um nicht ganzzahlige Skalierfaktoren nachteilig, weil bei den Löschvorgängen ein Informationsverlust auftritt.

Aus Patent Abstracts of Japan, Vol. 006, No 182 (E-131), 18.September 1982 bzw. aus der JP 57-097271 A ist ebenfalls ein Skalierungsverfahren bekannt. Auch dabei werden Daten gelöscht, wodurch Informationen verloren gehen.

Es ist daher Aufgabe der Erfindung, ein Verfahren zum Bearbeiten von Bilddaten anzugeben, das mit geringem Aufwand und hoher Geschwindigkeit aus einem Quellbild ein Zielbild mit geänderter Auflösung erzeugt und das Linien möglichst originalgetreu wiedergibt.

Diese Aufgabe wird durch ein Verfahren mit den Merkmalen des Patentanspruchs 1 und durch eine Schaltung mit den Merkmalen des Patentanspruchs 9 gelöst. Vorteilhafte Ausführungsformen der Erfindung sind in den Unteransprüchen angegeben.

Die Erfindung geht von der Überlegung aus, daß das Erzeugen des Zielbildes dann besonders einfach ist, wenn die beim Erzeugen des Zielbildes zu treffenden Entscheidungen möglichst einfach sind. Die Entscheidungen werden insbesondere dann einfach, wenn jeweils nur wenige oder sogar nur ein Bildelement des Quellbildes einen Einfluß auf die Darstellung eines Bildelements im Zielbild hat, und somit bei der Entscheidung berücksichtigt werden muß. Außerdem sollten mehrere Teile des Zielbildes gleichzeitig erzeugt werden können, um die Gesamtzeit für das Erzeugen des Zielbildes und damit auch für das Drucken zu reduzieren.

Deshalb wird beim Verfahren nach der Erfindung das Quellbild in matrixförmig angeordnete Quellteilbilder unterteilt, die im wesentlichen die gleiche Zahl von Quellbildelementen enthalten. Die matrixförmige Anordnung der Quellteilbilder setzt voraus, daß alle Quellteilbilder im wesentlichen die gleiche Zahl von Quellbildelementen enthalten. Lediglich in Randbereichen des Quellbildes kann es zu einer abweichenden Zahl von Quellbildelementen je Quellteilbild kommen. In der Regel werden jedoch nur Quellteilbilder verarbeitet, in denen alle Quellteilbilder die gleiche Zahl von Quellbildelementen enthalten.

Durch das Unterteilen des Quellbildes wird bei der Erfindung erreicht, daß die Umsetzung des Quellbildes in das Zielbild in einzelne Umsetzungen der Quellteilbilder in Zielteilbilder aufgeteilt wird. Die Einzelumsetzungen sind letztlich einfacher zu realisieren und können auch gleichzeitig ausgeführt werden.

Gemäß der Erfindung erfolgt die Umsetzung derart, daß die Darstellung nicht ganzzahliger Linienbreiten im Zielraster erfolgt, indem die Linie im Zielraster ausgedünnt wird. Die Umsetzung erfolgt insbesondere derart, daß Linien, die im Zielraster eine nicht ganzzahlige Linienbreite aufweisen, mit einer Periodizität ausgedünnt werden, die ein ganzzahliges Vielfaches des Umsetzungsfaktors ist. Die Periodizität entspricht dabei insbesondere der kleinsten, im Zielraster darstellbaren Einheit. Bei einer Umsetzung der Bilddaten von 240 dpi auf 600 dpi wird beispielsweise eine halbe Linienbreite im 600 dpi-Zielraster dargestellt indem die Linie mit einer Periodizität von fünf ausgedünnt wird.

Beim Ausdünnen einer Linie werden aufeinanderfolgende, identische Bilddaten der Linie im Zielraster periodisch zum inversen Wert, beispielsweise von Null zu Eins umgewandelt. Dadurch wird wird statt eines durchgehenden schwarzen Striches beispielsweise eine Zinnenstruktur dargestellt.

Durch das Ausdünnen einer Linie wird die Linienbreite der Original-Linie des Quellrasters im Zielraster zu einem sehr hohen Grad angenähert. Für den Betrachter eines entsprechenden Ausdrucks ist eine mit dem erfindungsgemäßen Verfahren erzeugte, im Zielraster gedruckte Linie von einer im Quellraster gedruckten Original-Linie praktisch nicht unterscheidbar, weil die geschwärzten Flächen nahezu gleich groß sind. Das Verfahren eignet sich besonders für Ausdrucke auf elektrofotografischen Druckern.

Bei dem Verfahren nach der Erfindung werden weiterhin aus den Quellbilddaten eines jeweiligen Quellteilbildes die Zielbilddaten eines zugehörigen Zielteilbildes nach Rechenoperationen ermittelt, die für alle Teilbilder im wesentlichen gleich sind. Unterschiede können bei Quellteilbildern und Zielteilbildern auftreten, die am Rand des Quellbildes bzw. des Zielbildes liegen. Die Rechenoperationen können einfache logische Verknüpfungen sein, wie z. B. UND-Verknüpfungen, ODER-Verknüpfungen, die logische Negation oder auch die Identität. Andere Rechenoperationen können ebenfalls angewendet werden. Bevorzugt werden jedoch schaltungstechnisch einfach zu realisierende sogenannte Bool'sche Rechenoperationen durchgeführt, zu denen die genannten Operationen zählen.

Die Zahl der Quellbilddaten je Quellteilbild unterscheidet sich bei dem erfindungsgemäßen Verfahren von der Zahl der Zielbilddaten je Zielteilbild. Durch diese Maßnahme wird erst die Veränderung der Auflösung erreicht. Beim Erhöhen der Auflösung ist die Zahl der Zielbilddaten je Zielteilbild größer als die Zahl der Quellbilddaten je Quellteilbild. Das heißt, es müssen pro Teilbild bzw. auch für das gesamte Bild mehr Zielbilddaten erzeugt werden, als Quellbilddaten vorhanden sind. Beim Verringern der Auflösung sind die Verhältnisse umgekehrt. Das bedeutet, daß die Zahl der Bilddaten des Quellbildes größer als die Zahl der Bilddaten des Zielbildes ist.

Beim Verfahren nach der Erfindung werden die einzelnen Zielteilbilder im Zielbild an jeweils einer Position angeordnet, die mit der Position des jeweils zugehörigen Quellteilbildes im Quellbild übereinstimmt. Somit sind auch die Zielteilbilder matrixförmig im Zielbild angeordnet. Durch die Positionsgleichheit ist gewährleistet, daß die Bildinhalte im wesentlichen unverändert bleiben.

In einem Ausführungsbeispiel des Verfahrens nach der Erfindung haben alle Teilbilder die gleiche Konturlinie, die vorzugsweise ein Quadrat oder ein Rechteck einschließt. Durch diese Maßnahme vereinfacht sich die Bearbeitung, da die Grenzen der Teilbilder mit Spaltengrenzen bzw. Zeilengrenzen von Bildelementespalten bzw. Bildelementzeilen übereinstimmen.

Ist der Umsetzungsfaktor zwischen der Auflösung des Quellbildes und der Auflösung des Zielbildes nicht. ganzzahlig, so müssen beim Festlegen der Zieldaten Entscheidungen abhängig von mindestens zwei Quellbilddaten getroffen werden. Durch das Verfahren nach der Erfindung wird erreicht, daß die Entscheidungen durch einfache logische Operationen getroffen werden können. Beträgt der Umsetzungsfaktor z. B. 2:5, so können boolsche Operationen durchgeführt werden. Diese Operationen sind einfach und lassen sich leicht mit einer digitalen Schaltung realisieren, falls die Bilddaten binär sind, und z. B. nur den numerischen Wert "0" oder "1" haben. Durch die angegebenen logischen Operationen wird insbesondere erreicht, daß eine diagonale Linie mit der Breite eines Quellelements im Zielbild als diagonale Anordnung von Bildpunkten dargestellt wird, bei der die Zielbildpunkte zusammenhängen.

Die Erfindung betrifft gemäß einem weiteren Aspekt eine Schaltungsanordnung zum Bearbeiten von Bilddaten, insbesondere zum Durchführen des Verfahrens nach der Erfindung bzw. dessen Ausführungsformen. Die oben genannten vorteilhaften technischen Wirkungen gelten auch für die Schaltungsanordnung.

In einem Ausführungsbeispiel wird die Schaltungsanordnung in einem Drucker eingesetzt, der eine Druckeinheit hat, deren Druckauflösung durch die Anordnung der Druckelemente vorgegeben ist.

Im folgenden werden Ausführungsbeispiele der Erfindung unter Bezugnahme auf die Zeichnungen erläutert. Darin zeigen:

Figur 1     zwei Quellbilder mit einer Auflösung von 240 dpi und zwei Zielbilder mit einer Auflösung von 600 dpi,

Figur 2     ein Quellteilbild mit einer Auflösung von 240 dpi und ein Zielteilbild mit einer Auflösung von 600 dpi,

Figur 3     eine Schaltungsanordnung zum Erzeugen der Zielbilddaten eines Zielteilbildes mit einer Auflösung von 600 dpi aus den Quellbilddaten eines Quellteilbildes mit einer Auflösung von 240 dpi,

Figur 4     eine erste Zuordnung von Teilflächen eines Quellteilbildes mit 240 dpi zu Teilflächen eines Zielteilbildes mit 600 dpi,

Figur 5     waagerechte Linien in einem Quellbild mit 240 dpi und in einem Zielbild mit 600 dpi,

Figur 6      eine zweite Zuordnung von Teilflächen eines Quellteilbildes mit 240 dpi zu Teilflächen eines Zielteilbildes mit 600 dpi,

Figur 7     diagonale Linien in einem Quellbild mit 240 dpi und in einem Zielbild mit 600 dpi,

Figur 8     zwei Quellbilder mit einer Auflösung von 400 dpi und zwei Zielbilder mit einer Auflösung von 600 dpi,

Figur 9     ein Quellteilbild mit einer Auflösung von 400 dpi und ein Zielteilbild mit einer Auflösung von 600 dpi,

Figur 10     eine Schaltungsanordnung zum Erzeugen der Zielbilddaten eines Zielteilbildes mit einer Auflösung von 600 dpi aus den Quellbilddaten eines Quellteilbildes mit einer Auflösung von 400 dpi,

Figur 11     waagerechte Linien in einem Quellbild mit 400 dpi und in inem Zielbild mit 600 dpi, und

Figur 12     diagonale Linien in einem Quellbild mit 400 dpi und in einem Zielbild mit 600 dpi.

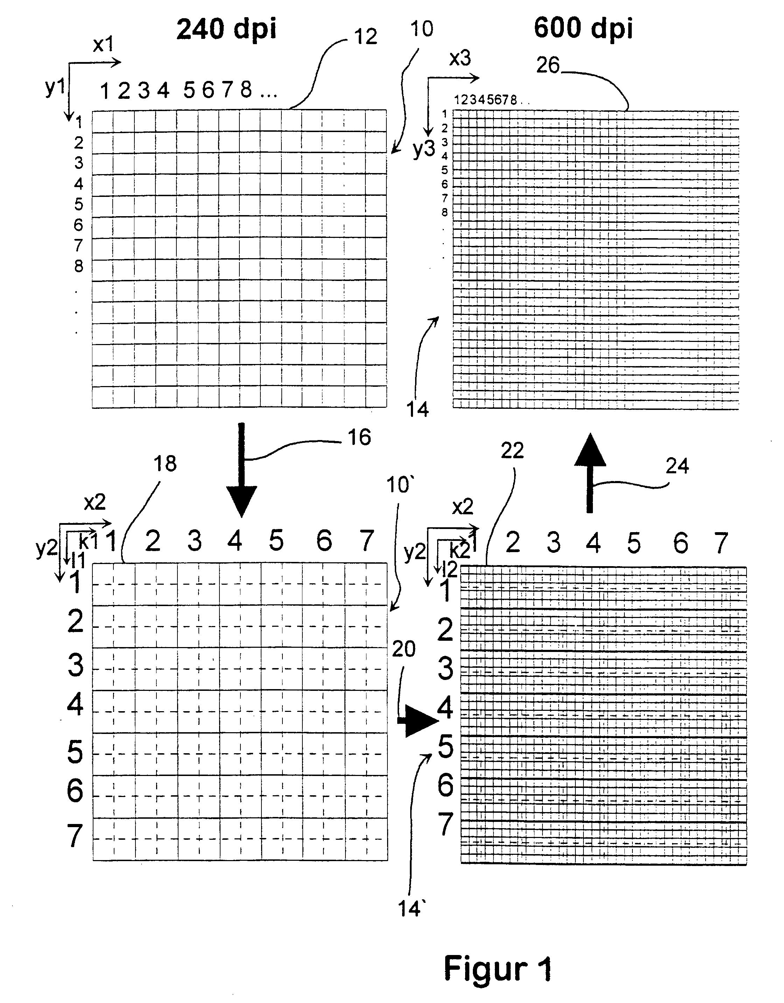

Figur 1 zeigt ein stark vergrößertes Quellbild 10 mit einer Auflösung von 240 dpi (Bildpunkte je Inch, 1 Inch = 25,4 mm). Das Quellbild 10 enthält matrixförmig angeordnete, quadratische Quellbildelemente Q x1,y1, wobei x1 die Spaltennummer und y1 die Zeilennummer eines jeweiligen Quellbildelements Q x1,y1 angibt. Zum Beispiel wird ein Quellbildelement 12 mit Q 10,1 bezeichnet, da es in der zehnten Bildelement-Spalte und der ersten Bildelement-Zeile liegt. Die Auflösung ist die Anzahl der Quellbildelemente 12 je 25,4 mm. In Originalgröße hat das Quellbild 10 240 Quellbildelemente Q x1,y1 je 25,4 mm.

Jedem Quellbildelement Q x1,y1 des Quellbildes 10 ist in einem Speicher (nicht dargestellt) genau ein Quellbilddatum QD x1,y1 zugeordnet, wobei x1 die Spaltennummer und y1 die Zeilennummer des zugehörigen Quellbildelements Q x1,y1 angibt. Das Quellbildelement Q 10,1 hat somit ein Quellbilddatum QD 10,1. Durch das Quellbilddatum QD x1,y1 wird die Darstellung des jeweils zugehörigen Quellbildelements Q x1,y1 festgelegt. Ein Quellbilddatum QD x1,y1 mit dem numerischen Wert "0" definiert ein weißes Quellbildelement Q x1,y1. Ein Quellbilddatum QD x1,y1 mit dem numerischen Wert "1" definiert dagegen ein schwarzes Quellbildelement Q x1,y1. Bei dem Ausführungsbeispiel der Figur 1 haben sämtliche Quellbilddaten QD x1,y1 den numerischen Wert "0", so daß alle Quellbildelemente Q x1,y1 weiß sind.

Die Quellbilddaten QD x1,y1 sind in den Speicherzellen des Speichers zweckmäßig so gespeichert, daß in Speicherzellen mit aufsteigenden Speicheradressen Quellbilddaten QD x1,y1 zu aufeinanderfolgenden Quellbildelementen Q x1,y1 einer Zeile aus Quellbildelementen gespeichert sind, wobei auch die Adressen von Speicherzellen mit Quellbilddaten QD x1,y1 zu Quellbildelementen Q x1,y1 aufeinanderfolgender Zeilen aufsteigende Werte haben. Die Quellbilddaten QD x1,y1 können jedoch auch an einer seriellen Schnittstelle nacheinander eingegeben werden. Auch in diesem Fall wird zweckmäßig eine vorgegebene Ordnung der Quellbilddaten QD x1,y1 eingehalten.

Im folgenden wird erläutert, wie aus dem Quellbild 10 ein Zielbild 14 mit einer Auflösung von 600 dpi erzeugt wird. In einem ersten Schritt werden jeweils vier ein Quadrat bildende Quellbildelemente Q x1,y1 zu matrixförmig angeordneten Quellteilbildern QT x2,y2 zusammengefaßt, wobei x2 die Spaltennummer eines jeweiligen Quellteilbildes QT x2,y2 und y2 die Zeilennummer eines jeweiligen Quellteilbildes QT x2,y2 angeben. Wie durch einen Pfeil 16 angedeutet, entsteht durch das Zusammenfassen der Quellbildelemente Q x1,y1 ein in die Quellbilder QT x2,y2 unterteiltes Quellbild 10'. Ein schraffiertes Quellteilbild 18 im Quellbild 10' wird auch als Quellteilbild QT 1,1 bezeichnet, da es in der ersten Quellteilbild-Spalte und der ersten Quellteilbild-Zeile angeordnet ist. Das Quellteilbild 18 enthält die vier Quellbildelemente Q 1,1, Q 2,1, Q 1,2 und Q 2,2. Im Quellbild 10' sind Ränder von Quellbildelementen Q x1,y1 die nicht mit Rändern von Quellteilbildern QT x2,y2 zusammenfallen, durch Strichlinien dargestellt. Die Ränder von Quellbildelementen Q x1,y1, die dagegen mit den Rändern von Quellteilbildern QT x2,y2 zusammenfallen, sind mit durchgezogenen Linien dargestellt.

Das Bestimmen der Adressen der zu einem Quellteilbild QT x2,y2 gehörenden Quelldaten QD x1,y1 erfolgt, indem durch Abzählen oder mit einfachen Rechenoperationen ausgehend von den Koordinaten des bearbeiteten Quellteilbildes QT x2,y2 zunächst die Koordinaten der zugehörigen Quellelemente Q x1,y1 nach den folgenden Formeln (1) bestimmt werden:

$$
\begin{aligned}
x1 &= x2 \cdot 2 - 1, \\
x1' &= (x2 \cdot 2), \\
y1 &= (y2 \cdot 2) - 1 , \qquad\qquad (1) \\
y1' &= (y2 \cdot 2),
\end{aligned}
$$

wobei ein hochgestellter Strich eine Alternative kennzeichnet. Mit den Formeln (1) lassen sich für ein Quellteilbild QT x2,y2 die zugehörigen Quellbildelemente Q x1,y1, Q x1',y1, Q x1,y1' und Q x1',y1' bzw. die zugehörigen Quellbilddaten QD x1,y1, QD x1',y1, QD x1,y1' und QD x1',y1' ermitteln. Sind die Quellbilddaten QD x1,y1 wie oben erläutert an aufeinander folgenden Speicherzellen im Speicher gespeichert, so kann ausgehend von den ermittelten Koordinaten die jeweilige Speicherzelle einfach berechnet werden, wenn bekannt ist, wo sich das erste Quellbilddatum QD x1,y1 im Speicher befindet und wieviele Quellbildelemente in einer Zeile des Quellbildes 10 enthalten sind.

Damit die Quellbilddaten QD x1,y1 für alle Quellteilbilder QT x2,y2 auf die gleiche Art und Weise weiter bearbeitet werden können, werden die Quellteilbilder QT x2,y2 als aus dem Quellbild 10' herausgelöst betrachtet. Die Quellbildelemente Q x1,x2 bleiben weiterhin matrixförmig angeordnet, werden aber durch für alle Quellteilbilder QT x2,y2 gleiche Spaltennummern k1 und Zeilennummern 11 in den herausgelösten Matrizen bezeichnet. Werden die Spaltennummer und die Zeilennummer als Koordinaten aufgefaßt, so gelten folgende Formeln (2) :

$$
\begin{aligned}
k1 &= x1 - (x2 \cdot 2) + 2, \\
k1' &= x1' - (x2 \cdot 2) + 1, \\
11 &= y1 - (y2 \cdot 2) + 2, \qquad (2) \\
11' &= y1' - (y2 \cdot 2) + 1,
\end{aligned}
$$

Nach einer für alle Quellteilbilder gleichen Rechenvorschrift werden in einem zweiten Schritt aus den Quellbilddaten QD k1,11 Zielbilddaten ZD k2,12 berechnet, welche die Darstellung zugehöriger Zielbildelemente Z k2,12 festlegen, die in einem jeweiligen Zielteilbild ZT x2,y2 matrixförmig anzuordnen sind. Dabei bezeichnet k2 die Spaltennummer und 12 die Zeilennummer der Zielbildelemente innerhalb eines Zielteilbildes ZT x2,y2. Die Koordinaten eines Zielteilbildes ZT x2,y2 stimmen mit den Koordinaten des Quellteilbildes QT x2,y2 überein, dessen Quellbilddaten QD k1,11 zum Erzeugen der Zielbilddaten ZD k2,12 des jeweiligen Zielteilbildes ZT x2,y2 verwendet wurden. Somit sind auch die Zielteilbilder ZT x2,y2 matrixförmig angeordnet. Aus dem Quellbild 10' entsteht, wie durch einen Pfeil 20 angedeutet, ein Zielbild 14'.

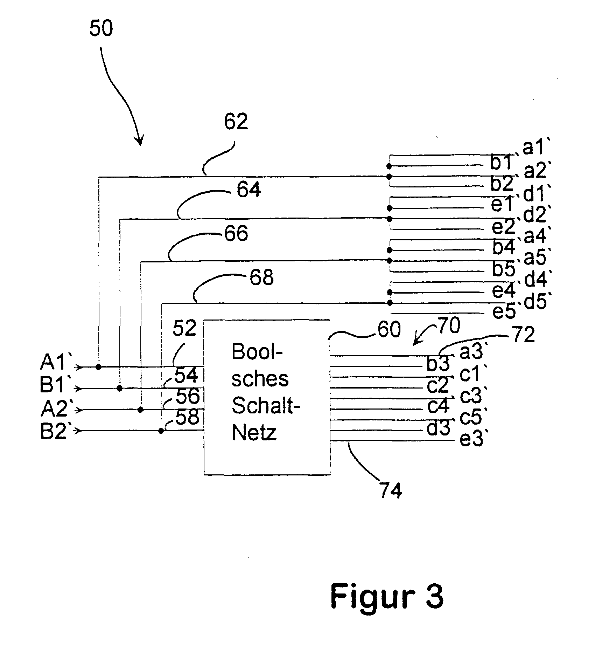

Die Quellteilbilder QT x2,y2 haben ebenfalls eine Auflösung von 240 dpi und enthalten, wie bereits erwähnt, jeweils vier Quellbildelemente Q k1,11, zu denen vier Quellbilddaten QD k1,11 gehören. Aus den vier Quellbilddaten QD k1,11 eines Quellteilbildes QT x2,y2 werden fünfundzwanzig Zielbilddaten ZD k2,12 nach vorgegebenen Rechenvorschriften erzeugt, die unten anhand der Figuren 3 bis 7 erläutert werden.

Während der Index k1 bzw. 11 nur die beiden Werte "1" und "2" annimmt, durchläuft der Index k2 bzw. 12 die fünf numerischen Werte von "1" bis "5". Somit beträgt das Verhältnis aus Spaltenzahl im Quellteilbild QT x2,y2 zur Spaltenzahl im Zielteilbild ZT x2,y2 2:5. Dieses Verhältnis gilt auch für das Verhältnis aus Zeilenzahl im Quellteilbild QT x2,y2 zur Zeilenzahl im Zielteilbild ZT x2,y2. Ein Quellteilbild QT x2,y2 hat die gleiche Größe wie das zugehörige Zielteilbild ZT x2,y2. Dies führt dazu, daß die Zielbildelemente Z k2,12 kleiner sind als die Quellbildelemente Q k1,11. Die Zahl von Zielbildelementen Z k2,12 je Wegeinheit erhöht sich im Zielbild sowohl in Spaltenrichtung als auch in Zeilenrichtung gegenüber dem Quellbild im Verhältnis 5:2. Daraus folgt, daß das Zielteilbild ZT x2,y2 eine Auflösung von 600 dpi hat.

Aus dem Quellteilbild 18 mit einer Auflösung von 240 dpi wird z. B. ein Zielteilbild 22 erzeugt, das auch als Zielteilbild ZT 1,1 bezeichnet wird. Im Zielbild 14' sind die Grenzen von Zielbildelementen Z k2,12, die nicht mit den Grenzen von Zielteilbildern ZT x2,y2 zusammenfallen, durch dünne Linien dargestellt. Dagegen sind die Grenzen von Zielbildelementen Z k2,12, die mit den Grenzen von Zielteilbildern ZT x2,y2 zusammenfallen, durch dickere Linien dargestellt.

In einem Dritten Schritt, der durch einen Pfeil 24 verdeutlicht wird, wird aus der lokalen Spaltennummer k2 bzw. Zeilennummer 12 eine Spaltennummer x3 bzw. Zeilennummer y3 bezüglich des Zielbildes 14 gemäß der Formeln (3) berechnet.

$$x3 = k1 + (x2 - 1) \cdot 5,$$

$$y3 = 11 + (y2 - 1) \cdot 5. \qquad\qquad (3)$$

Die Zielbildelemente Z x3,y3 sind wiederum im Zielbild 14 matrixförmig angeordnet. Ein Zielbildelement 26 befindet sich in der zehnten Spalte und der ersten Zeile des Zielbildes 14 und wird somit als Zielbildelement Z 10,1 bezeichnet. Auf die Zielbilddaten ZD x3,y3 des Zielbildes kann einheitlich zugegriffen werden, da sich für jedes Zieldatum ZD x3,y3 aus der Spaltennummer x3 und der Zeilennummer y3 nach einer einfachen vorgegebenen Vorschrift eine Adresse im Speicher ermitteln läßt, unter der das Zielbilddatum ZD x3,y3 für die Weiterbearbeitung gespeichert wird.

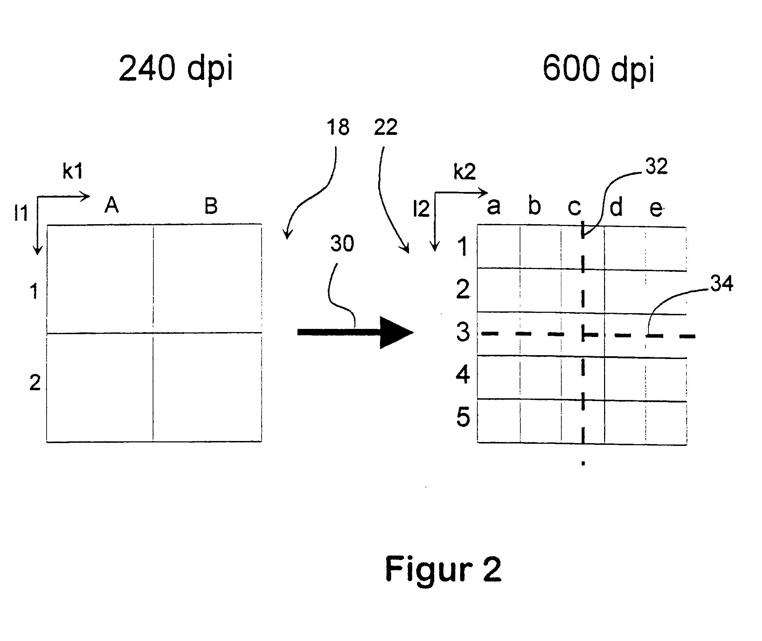

Figur 2 zeigt auf der linken Seite eine nochmalige Vergrößerung des Quellteilbildes 18, welches eine Auflösung von 240 dpi hat. Auf der rechten Seite ist das Zielteilbild 22 dargestellt, das eine Auflösung von 600 dpi hat. Ein Pfeil 30 verdeutlicht den Übergang vom Quellteilbild 16 mit 240 dpi zum Zielteilbild 22 mit 600 dpi.

In Übereinstimmung mit dem oben Gesagten enthält das Quellteilbild 18 in der obersten dargestellten Zeile von links nach rechts die Bildelemente Q A,1 und Q B,1, wobei jedoch die Spaltennummern k1 durch Großbuchstaben ersetzt sind, die eine eindeutige Kurzbezeichnung ermöglichen. Die beiden Bildelemente in der darunterliegenden Zeile heißen Q A,2 und Q B,2. Im folgenden wird für die Bildelemente in einem Quellteilbild, z. B. 18, die verkürzte Bezeichnung A1, B1, A2 und B2 verwendet.

Das Zielteilbild 22 enthält zeilenweise von oben nach unten sowie innerhalb einer Zeile von links nach rechts aufgezählt die Zielbildelemente Z a,1 bis Z e,1; Z a,2 bis Z e,2; Z a,3 bis Z e,3; Z a,4 bis Z e,4 sowie Z a,5 bis Z e,5, wobei jedoch die Spaltennummern k2 durch Kleinbuchstaben ersetzt sind. Auch für diese Zielbildelemente wird im folgenden die Kurzbezeichnung verwendet, d.h. a1 bis e5.

Eine vertikale Strichlinie 32 und eine horizontale Strichlinie 34 verdeutlichen Ränder der Quellbildelemente A1 bis B2, die beim gedanklichen Überdecken des Zielteilbildes 22 mit dem Quellteilbild 18 durch mehrere Quellbildelemente A1 bis B2 überdeckt werden.

Im folgenden wird auch für die Quellbilddaten QD A,1 bis QD B,2 eines Quellteilbildes QT x2,y2 eine verkürzte Bezeichnung verwendet. Dabei wird den Quellbilddaten zur Unterscheidung von den zugehörigen Quellbildelementen A1 bis B2 ein hochgestellter Strich nachgestellt. Zu den Bildelementen A1, B1, A2 bzw. B2 gehören somit in der angegebenen Reihenfolge Quellbilddaten A1', B1', A2' bzw. B2'. Auf gleiche Weise wird für die Zielbilddaten ZD a,1 bis ZD e,5 die verkürzte Schreibweise a1' bis e5' verwendet. Somit gehören zu den Zielbildelementen a1 bis e5 des Zielteilbildes 22 die Zielbilddaten a1' bis e5'.

Figur 3 zeigt eine Schaltungsanordnung 50, die aus den Quellbilddaten A1', B1', A2' und B2' des Quellteilbildes 18 (vgl. Figur 2) mit 240 dpi die Zielbilddaten a1' bis e5' des Zielteilbildes 22 (vgl. Figur 2) mit 600 dpi erzeugt. Beim Erläutern der Figur 3 wird im folgenden auch auf die Figur 2 Bezug genommen. Die Quellbilddaten A1', B1', A2' bzw. B2' werden in dieser Reihenfolge an Eingangsleitungen 52, 54, 56 bzw. 58 in einen Schaltungsblock 60 eingegeben.

Die Schaltungsanordnung 50 muß die Zielbilddaten a1' bis e5' aus den Quellbilddaten A1', B1', A2' und B2' so erzeugen, daß das entstehende Zielteilbild 22 möglichst die gleichen Bildinhalte wiedergibt wie das Quellteilbild 18 - jedoch mit einer höheren Auflösung. Dieser Vorgang ist unkritisch für die Zielbildelemente, die beim gedanklichen Übereinanderlegen von Quellteilbild 18 und Zielteilbild 22 nur durch eines der Quellbildelemente A1, B1, A2 und B2 bedeckt sind, vgl. Figur 2. Das sind die Zielbildelemente a1, b1, a2, b2, d1, e1, d2, e2, a4, b4, a5, b5, d4, e4, d5 und e5. Um die Bildinhalte für diese Quellbildelemente zu erhalten, muß jedes dieser Zielbildelemente lediglich so dargestellt werden, wie das Quellbildelement A1 bis B4 von welchem es beim gedanklichen Übereinanderlegen bedeckt wird. Das bedeutet, daß zum Erzeugen der Zielbilddaten der genannten Zielbildelemente das Quellbilddatum A1' bis B2' desjenigen Quellbildelements A1 bis B2 zu kopieren ist, das das entsprechende Zielbildelement beim gedanklichen Übereinanderlegen bedeckt, z. B. für die Zielbilddaten a1', b1', a2' und b2' das Quellbilddatum A1'. Somit wird zum Erzeugen dieser Zielbilddaten die logische Operation der Identität verwendet. Diese Operation wird in einer Schaltung durch direkt durchgeschaltete Leitungen 62 bis 68 realisiert.

Über die Leitung 62 wird das Quellbilddatum A1' übertragen und über Leitungsverzweigungen der Leitung 62 als Zielbilddatum a1', b1', a2' bzw. b2' ausgegeben. Hat die linke obere Ecke des Quellteilbilds 18 nach Figur 2 ein schwarzes Quellbildelement A1, so werden die vier Zielbildelemente a1, b1, a2 und b2 im Zielteilbild 22 ebenfalls schwarz dargestellt. Der Bildinhalt bzw. die Bildinformation der linken oberen Ecke des Quellteilbildes 16 wird demzufolge im linken oberen Eckbereich des Zielteilbildes 22 mit erhöhter Auflösung wiedergegeben.

Über die Leitung 64 wird das Quellbilddatum B1' als Zielbilddatum d1', e1', d2' bzw. e2' übernommen, so daß die Bildinformation der rechten oberen Ecke des Quellteilbildes 18 in der rechten oberen Ecke des Zielteilbildes 22 wiedergegeben wird, vgl. auch Figur 2. Auf ähnliche Weise wird mit der Leitung 66 bzw. 68 das Quellbilddatum A2' als Zielbilddatum a4', b4', a5' und b5' bzw. das Quellbilddatum B2' als Zielbilddatum d4', e4', d5' und e5' ausgegeben.

Das Erhöhen der Auflösung ist schwieriger, wenn beim gedanklichen Übereinanderlegen des Quellteilbildes 18 und des Zielteilbildes 22 Zielbildelemente durch zwei oder mehr Quellbildelemente abgedeckt werden. Durch solche Zielbildelemente a3, b3, c1 bis c5, d3 und e3 verlaufen die Strichlinien 32 und 34. Ist eines der abdeckenden Quellbildelemente A1 bis B4 weiß, und ist ein anderes dasselbe Zielbildelement abdeckendes Quellbildelement A1 bis B4 schwarz, d.h. auch der numerische Wert der zugehörigen Quellbilddaten unterscheidet sich, so muß eine Entscheidung getroffen werden, wie das betreffende Zielbilddatum zu ermitteln ist. Eine Entscheidung ist dagegen einfach, wenn die ein Zielbildelement abdeckenden Quellbildelemente A1 bis B2 alle weiß oder alle schwarz sind und somit auch ihre Quellbilddaten A1' bis B2' den gleichen numerischen Wert haben. In diesem Fall muß lediglich einer der numerischen Werte der Quellbilddaten als Wert für das betreffende Zielbilddatum übernommen werden.

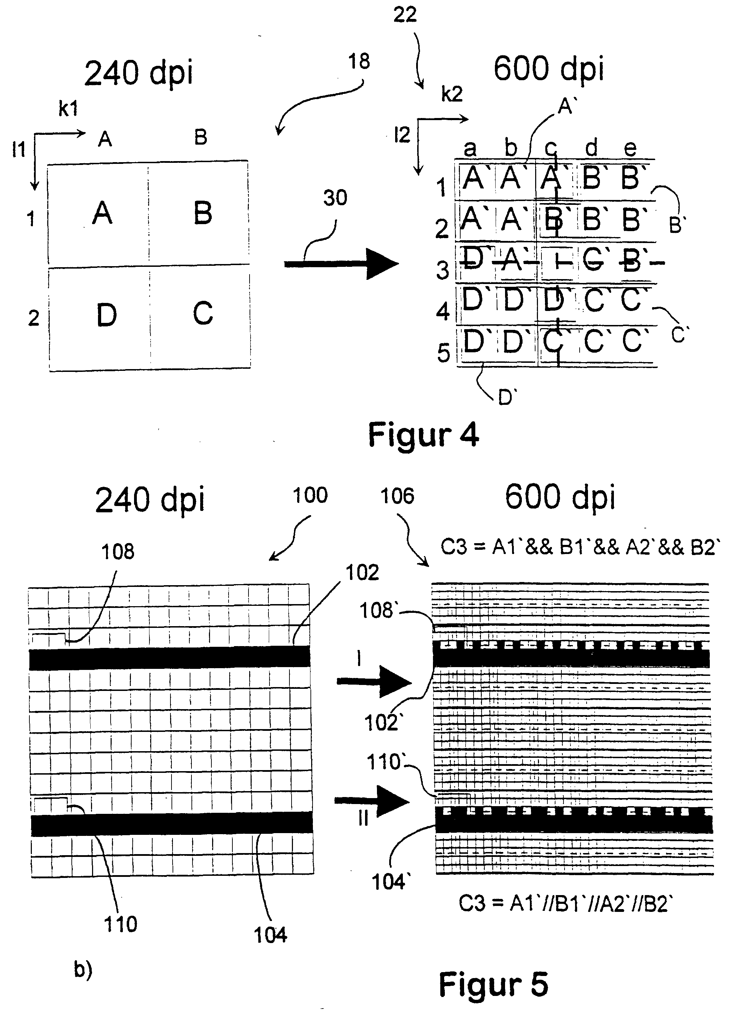

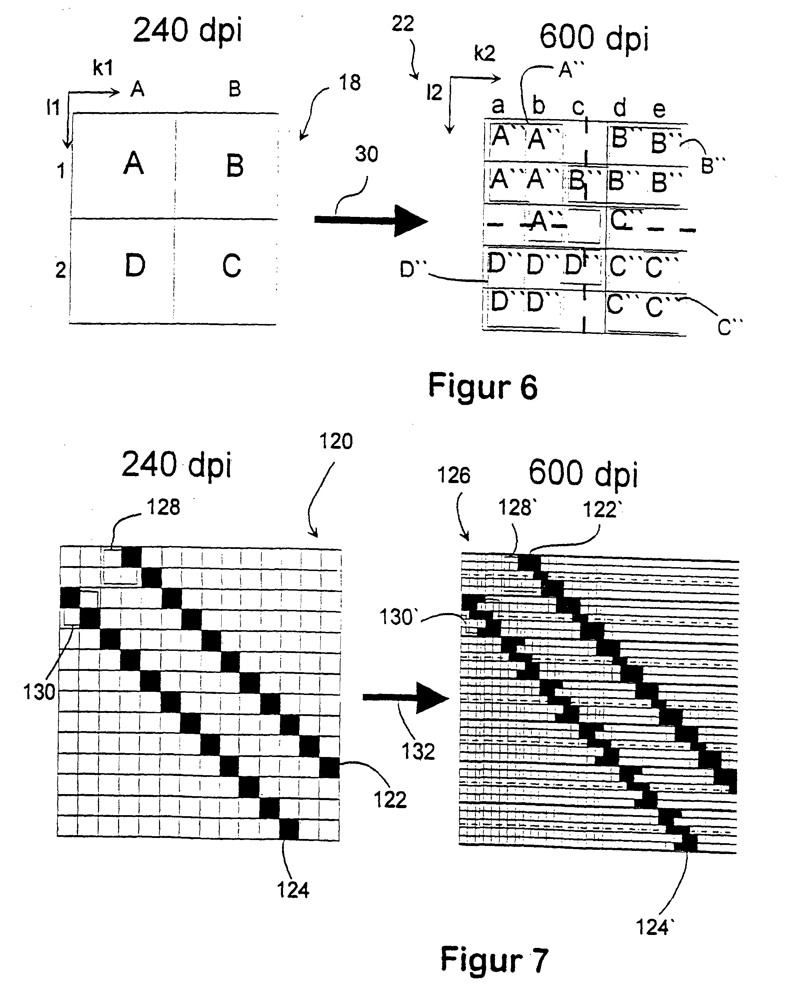

Die zu den Zielbildelementen a3, b3, c1 bis c5, d3 und e3 gehörenden Zielbilddaten a3', b3', c1' bis c5', d3' und e3' werden im Schaltungsblock 60 erzeugt, wobei jeweils die erwähnte Entscheidung getroffen wird. Der Schaltungsblock 60 hat die vier Eingangsleitungen 52, 54, 56 bzw. 58 zum Eingeben der Quellbilddaten A1', B1', A2' bzw. B2'. Im Schaltungsblock 60 werden mit den Quellbilddaten A1', B1', A2' und B2' logische Verknüpfungen ausgeführt, die unten anhand der Figuren 4 und 5 bzw. für ein weiteres Ausführungsbeispiel anhand der Figuren 6 und 7 erläutert werden. Die bei diesen logischen Verknüpfungen entstehenden Zielbilddaten a3', b3', c1' bis c5', d3' und e3' werden dann auf Ausgangsleitungen eines Ausgangsbusses 70 ausgegeben. Auf einer Ausgangsleitung 72 wird z.B. das Bilddatum a3' und auf einer Ausgangsleitung 74 das Bilddatum e3' ausgegeben.

Beim Erzeugen des Zielbildes 10 gemäß Figur 1 mit der erhöhten Auflösung werden zweckmäßig mehrere identische Schaltungsanordnungen 50 verwendet, die gleichzeitig mehrere Zielteilbilder mit erhöhter Auflösung erzeugen. Durch diese Maßnahme erhöht sich zwar der Schaltungsaufwand etwas, die Zeit für das Erzeugen aller Zielbilder ZT x2,y2 und damit des Zielbildes 14 (vgl. Figur 1) wird jedoch erheblich verringert.

Figur 4 zeigt eine erste Zuordnung von Teilflächen A bis D des Quellteilbildes 18 zu Teilflächen A' bis D' des Zielteilbildes 22 bei einer ersten Variante zum Erzeugen der Zielbilddaten am Ausgang der Schaltungsanordnung 50, vgl. Figur 2. Eine Hauptforderung bei der Umsetzung eines Quellbildes, bzw. eines Quellteilbildes in ein Zielbild bzw. Zielteilbild mit höherer Auflösung ist, daß bei der Wiedergabe von Linien keine Verfälschung auftritt, z. B. eine unterschiedliche Linienbreite im Quellbild und im Zielbild. Daraus ergibt sich für die Umsetzung der Auflösung von 240 dpi auf 600 dpi insbesondere die Forderung, daß wiederzugebende Linien der Linienbreite ein Bildelement im Quellteilbild durch Linien der Breite 2,5 Zielbildelemente dargestellt werden müssen. Bildelemente sind jedoch die kleinste darstellbare Einheit, so daß es nicht möglich ist, nur einen Teil eines Bildelements, z. B. nur die Hälfte, darzustellen. Einen Ausweg bietet das gezielte Weglassen von Bildpunkten am Rand einer Linie im Zielteilbild. Durch diese Maßnahme wird die Linie an ihrem Rand "ausgedünnt". Zum Erläutern dieses "Ausdünnens" von horizontalen und vertikalen Linien wurden die quadratischen Teilflächen, welche durch die Quellbildelemente A1, B1, B2 bzw. A2 bedeckt werden, in dieser Reihenfolge mit A, B, C bzw. D bezeichnet.

Den Teilflächen A, B, C und D entsprechen im Zielteilbild 22 in dieser Reihenfolge die Teilflächen A', B', C' und D', die jeweils durch Zielbildelemente gebildet werden. In den vier Eckbereichen des Zielteilbildes 22 sind jeweils vier ein Quadrat bildende Zielbildelemente der Teilfläche A', B', C' bzw. D' zugeordnet, die in der betrachteten Ecke im Zielteilbild 22 liegt. Zum Beispiel sind die Zielbildelemente a1, b1, a2 und b2 der Teilfläche A' zugeordnet. Wie bereits erwähnt, ist diese Zuordnung eine Folge der Forderung, die Auflösung so zu erhöhen, daß die Bildinhalte im wesentlichen unverändert bleiben.

Der Bereich A' enthält zusätzlich noch die Zielbildelemente c1 und b3. Dadurch ist der Bereich A' im Gegensatz zum entsprechenden Bereich A nicht quadratisch, sondern hat ähnlich wie ein Puzzleteil Vorsprünge. Der Flächenbereich B' enthält weiterhin zusätzlich zu den Zielbildelementen d1, d2, e1 und e2 die Zielbildelemente c2 und e3. Der Flächenbereich C' enthält zusätzlich zu den ein Quadrat bildenden Zielbildelementen d4, e4, d5 und e5 die Zielbildelemente d3 und c5. Der Flächenbereich D' enthält zusätzlich zu den Zielbildelementen a4, b4, a5 und b5 die Zielbildelemente a3 und c4.

Die Flächenbereiche A' bis D' haben den gleichen asymmetrischen Umriß. Jedoch sind die Flächenbereiche A' bis D' jeweils um 90° gedreht zueinander angeordnet, wenn sie in dieser Reihenfolge betrachtet werden. Durch die Drehung der Flächenbereiche A' bis D' kommt es ebenfalls nach Art eines Puzzles zum fast vollständigen Bedecken der Fläche des Zielteilbildes 22 durch die Flächenbereiche A' bis D'. Ausgenommen ist lediglich der Flächenbereich des Zielbildelements c3. Die Zielbildelemente des jeweiligen Flächenbereichs A' bis D' werden wie das jeweilige Flächenelement A bis D dargestellt. Dazu wird nur die logische Operation der Identität benötigt, die durch direkte Leitungsverbindungen realisiert wird. In einem vereinfachten Schaltungsblock (nicht dargestellt) wird somit nur noch das Zielbilddatum c3' berechnet.

Sind z. B. die Flächenelemente A und B im Quellteilbild 18 Bestandteil einer horizontalen schwarzen Linie, so werden im Zielteilbild 22 die zu den Flächenbereichen A' und B' gehörenden Zielbildelemente a1 bis e1, a2 bis e2, b3 und e3 schwarz dargestellt. Die so entstehende horizontale Linie ist an ihrem unteren Rand ausgedünnt, da zumindest das Bildelement a3 und das Bildelement d3 weiß dargestellt werden. Ähnlich wird auch eine horizontale Linie ausgedünnt, welche die Flächenbereiche D und C im Quellteilbild 18 enthält. Enthält das Quellteilbild 18 eine vertikale Linie, zu deren Darstellung die Flächenbereiche A und D im Quellteilbild 18 schwarz sind, so werden im Zielteilbild 22 die Bildelemente a1 bis a5, b1 bis b5, c1 und c4 bzw. die Flächenbereiche A' und D' schwarz dargestellt. Die vertikale Linie ist ebenfalls ausgedünnt, da das Bildelement c2 und das Bildelement c5 sowie die Bildelemente d1 bis d5 und e1 bis e5 weiß dargestellt werden. Auf ähnliche Art wird eine vertikale Linie ausgedünnt, welche die Flächenbereiche B und C im Quellteilbild 16 enthält.

Figur 5 zeigt ein Quellbild 100 mit einer Auflösung von 240 dpi, das in der vierten und in der zwölften Zeile je eine horizontale schwarze Linie 102 bzw. 104 enthält. Beide Linien 102 und 104 haben die Breite eines Bildelements. Bei der Umsetzung der horizontalen Linie 102 in die höhere Auflösung von 600 dpi mit einer ersten Variante I entsteht in einem Zielbild 106 eine Linie 102' mit einer zinnenartigen oberen Kante. Dabei wird jedes Quellteilbild QT x2,y2 des Quellbildes 100 nach dem anhand der Figur 4 erläuterten Verfahren bearbeitet, so z. B. ein Quellteilbild 108. Im folgenden wird auch auf die Figur 4 Bezug genommen. Ein aus dem Quellteilbild 108 erzeugtes Zielteilbild 108' hat schwarze Flächenbereiche C' und D'. Durch die Schwärzung der Zielbildelemente a3 und d3 entstehen auf der Linie 102' die Zinnen, zwischen denen die Linie 102' ausgedünnt ist. Das zum Zielbildelement c3 eines jeden Zielteilbildes ZT x2,y2 gehörende Zielbilddatum c3' wird nach folgender Formel (4) im Schaltblock 60 gemäß Figur 3 berechnet:

$$c3' = A1' \;\&\&\; B1' \;\&\&\; A2' \;\&\&\; B2', \tag{4}$$

wobei A1', B1', A2' und B2' die Quellbilddaten der Quellbildelemente des bearbeiteten Quellteilbildes QT x2,y2 sind, das im Quellbild 100 die gleiche Position wie das momentan erzeugte Zielteilbild im Zielbild 106 hat. Also für das Zielteilbild 108' die zu den Bildelementen des Quellteilbildes 108 gehörenden Quellbilddaten QD 1,3, QD 2,3, QD 1,4 und QD 2,4. Das Zeichen "&&" in Formel (4) bedeutet in Übereinstimmung mit der Programmiersprache C eine logische UND-Verknüpfung. Das Zielbilddatum c3' erhält nur den numerischen Wert "1", wenn alle in der Formel (4) genannten Quellbilddaten A1', B1', A2' und B2' ebenfalls den numerischen Wert "1" haben. In allen anderen Fällen hat das Zielbilddatum c3' den numerischen Wert "0", so daß das zugehörige Zielbildelement c3 weiß dargestellt wird.

Bei einer zweiten Variante II entsteht aus der Linie 104 im Quellbild 100 bei der Umsetzung in die höhere Auflösung von 600 dpi eine horizontale Linie 104', deren oberer Rand ebenfalls zinnenartig ausgebildet ist, jedoch vom zinnenartigen Rand der Linie 102' abweicht. Das erklärt sich dadurch, daß das Zielbilddatum c3' des zentralen Zielbildelements c3 jedes Zielteilbildes ZT x2,y2 in der Variante II nach folgender Formel (5) berechnet wird:

$$c3' = A1' \;||\; B1' \;||\; A2' \;||\; B2', \tag{5}$$

wobei A1', B1', A2' und B2' wieder die Quellbilddaten des Quellteilbildes QT x2,y2 an einer Position im Quellbild 100 sind, die mit der Position des erzeugten Zielteilbildes ZT x2,y2 im Zielbild 106 übereinstimmt. Für ein Quellteilbild 110 sind dies die Quellbilddaten QD 1,11, QD 2,11, QD 1,12 und QD 2,12, wobei das betrachtete Zielteilbild ein Zielteilbild 110' ist. Durch das Zeichen "||" wird wiederum in Anlehnung an die Programmiersprache C die logische ODER-Verknüpfung dargestellt. Das Zielbilddatum c3' erhält somit den numerischen Wert "1", sobald mindestens ein Quellbilddatum A1', B1', A2' oder B2' den numerischen Wert "1" hat.

Wie der Figur 5 zu entnehmen ist, wird beim Ausdünnen einer Linie statt eines durchgehenden schwarzen Striches eine Zinnenstruktur dargestellt. Datentechnisch entspricht dies der periodischen Umwandlung binärer Daten, insbesondere der Umwandlung von Einsen ("schwarzer Bildpunkt") in Nullen ("weißer Bildpunkt"). In dem in Figur 5 dargestellten Beispiel hat die Zinnenstruktur der Linien 102' und 104' eine Periodizität von fünf, d.h. das zweifache des Umsetzungsfaktors von 2,5. Die durch die Zinnenstruktur bewirkte Ausdünnung der Linien 102' und 104' erfolgt also mit einer Periodizität, die ein ganzzahliges Vielfaches des Umsetzungsfaktors ist. Die beiden Linien 102' und 104' unterscheiden sich nur dadurch, daß ihre Zinnenstruktur invers ist.

Für den Betrachter eines entsprechenden Ausdrucks ist die mit den beiden Verfahren I und II erzeugte Zinnenstruktur der Linien 102' und 104' im 600 dpi-Raster praktisch nicht von der im 240-dpi-Raster gedruckten Original-Linie unterscheidbar. Aufgrund der begrenzten Aufösung des menschlichen Auges wird die Zinnenstruktur in dem sehr feinen 600 dpi-Raster vom Auge praktisch nicht wahrgenommen. Das Auge integriert über die aufgezeichnete Zinnenstruktur, wodurch der Eindruck einer halben Linienbreite entsteht.

Figur 6 zeigt eine zweite Zuordnung der Teilflächen A bis D des Quellteilbildes 18 zu Teilflächen A" bis D" des Zielteilbildes 22. Neben der korrekten Wiedergabe von horizontalen und vertikalen Linien sollen bei der Umsetzung in die höhere Auflösung auch geneigte Linien und geneigte Konturen nicht zu stark verfälscht werden. Bei geneigten Linien bzw.

Konturen treten Abstufungen der enthaltenen Bildelemente auf. Die höchsten Anforderungen bezüglich einer geringen Verfälschung ergeben sich bei Linien mit der Breite eines Bildelementes und einer Neigung von 45°. Figur 7, die unten noch ausführlich erläutert wird, zeigt in einem Quellbild 120 zwei derartige diagonale Linien 122 und 124.

Die Flächenbereiche der Bildelemente A1, B1, B2 und A2 werden in dieser Reihenfolge wieder mit A, B, C und D bezeichnet. Flächenbereiche von Zielbildelementen, die dem jeweiligen Flächenbereich A, B, C oder D zugeordnet werden können, sind im Zielteilbild 22 als entsprechende Flächenbereiche A", B", C" bzw. D" gekennzeichnet. Die Flächenbereiche A", B", C" und D" haben jeweils fünf Zielbildelemente und stimmen in ihrem Umriß überein. Jedoch sind die Flächenbereiche A", B", C" und D" in dieser Reihenfolge um jeweils 90° zueinander gedreht. Die Zielbildelemente a3, c1, c3, c5 und e3 sind keinem der Flächenbereiche A" bis D" zugeordnet. Die Berechnung ihrer Zielbilddaten a3', c1', c3', c5' und e3' ist, wie aus den im folgenden angegebenen Formeln (6) ersichtlich.

Die Zielbilddaten a1' bis e5' jedes Zielteilbildes ZT x2,y2 bzw. ZT k2,12 werden im Ausführungsbeispiel mit der zweiten Zuordnung nach den folgenden Formeln (6) berechnet:

a1' = A1', a2' = A1', b1' = A1', b2' = A1', b3' = A1',
c2' = B1', d1' = B1', d2' = B1', e1' = B1', e2' = B1',
a4' = A2', a5' = A2', b4' = A2', b5' = A2', c4" = A2',
d3' = B2', d4' = B2', d5' = B2', e4' = B2', e5' = B2',
a3' = A2' || A1' && (!B1' || !A2' || !B2')
c1' = A1' || B1' && (!A1' && !A''' && !B2')
c3' = (A1' && B1') || (A1' && A2') || (A1' && B2') || (B1' && A2') || (B1' && B2') || (A2' && B2')
c5' = B2' || A2' && (!A1' && !B1' && !B2')
e3' = B1' || B2' && (!A1' && !B1' && !A2')

dabei gilt für die Operatoren "||" und "&&" in Übereinstimmung mit dem oben gesagten, daß der Operator "||" die ODER-Verknüpfung und der Operator "&&" die UND-Verknüpfung bezeichnen. Der Operator "!" bezeichnet in Übereinstimmung mit der Programmiersprache C die logische Negation des unmittelbar folgenden Quellbilddatums. Aus dem logischen Wert "0" wird durch Negation der logische Wert "1" und umgekehrt. Bezüglich der Ausführungsreihenfolge der durch die Operatoren "||", "&&" sowie "!" bezeichneten Rechenoperationen gilt, daß zuerst die Negationen, dann die UND-Verknüpfungen und erst zum Schluß die ODER-Verknüpfung ausgeführt werden.

Figur 7 zeigt die diagonalen Linien 122 und 124 im Quellbild 120 mit 240 dpi und diagonale Linienstrukturen 122' und 124' in einem Zielbild 126, welches wie durch einen Pfeil 132 verdeutlicht aus dem Quellbild 120 erzeugt wird. Beim Erzeugen des Zielbildes 126 aus dem Quellbild 120 werden aus der diagonalen Linie 122 die diagonale Linienstruktur 122' und aus der diagonalen Linie 124 eine diagonale Linienstruktur 124' erzeugt. Die beiden diagonalen Linienstrukturen 122' und 124' sind zwar im wesentlichen diagonale Linien, haben aber eine voneinander abweichende Struktur.

Wird ein Quellteilbild 128 betrachtet, so entsteht aus ihm beim Erzeugen des Zielbildes 126 mit der gegenüber 240 dpi erhöhten Auflösung von 600 dpi ein Zielteilbild 128'. Ebenso entsteht aus einem Quellteilbild 130 ein Zielteilbild 130'. Im Quellteilbild 128 ist nur das Bildelement in der oberen rechten Ecke schwarz. Dagegen sind im Quellteilbild 130 die Bildelemente in der linken oberen Ecke und der rechten unteren Ecke schwarz. Auf diesen Unterschied zwischen dem Quellteilbild 128 und 130 ist es zurückzuführen, daß die erzeugten Quellteilbilder 128' und 130' beim Anwenden der oben angegebenen Formeln (6) in der gezeigten Weise voneinander abweichen.

In einem anderen Ausführungsbeispiel werden anstelle der Formeln (6) die folgenden Formeln (6') verwendet:

a1' = A1', a2' = A1', b1' = A1', b2' = A1',
d1' = B1', d2' = B1', e1' = B1', e2' = B1',
a4' = A2', a5' = A2', b4' = A2', b5' = A2',

d4' = B2', d5' = B2', e4' = B2', e5' = B2',
c1' = A1' && B1' || B1' && !A2' || A1' && !B2'
c2' = A1' && B1' || A1' && B2' || B1' && A2'
a3' = A1' && A2' || A1' && !B2' || !B1' && A2'
b3' = A1' && B2' || A1' && A2' || B1' && A2'
c3' = A1' && B1' || A1' && A2' || A1' && B2' || B1' && A2' || B1' && B2' || A2' && B2'
d3' = A1' && B2' || B1' && A2' || B1' && B2'
e3' = !A1 && B2' || B1' && !A2' || B1' && B2'
c4' = A1' && B2' || B1' && A2' || A2' && B2'
c5' = !A1' && B2' || !B1 && A2' || A2' && B2'

wobei die Operatoren "||", "&&" und "!" in dieser Reihenfolge die ODER-Verknüpfung, die UND-Verknüpfung und die logische Negation bezeichnen. Mit den Formeln (6') werden die Bildinhalte des Quellbildes ohne wesentliche Verfälschungen im Zielbild wiedergegeben.

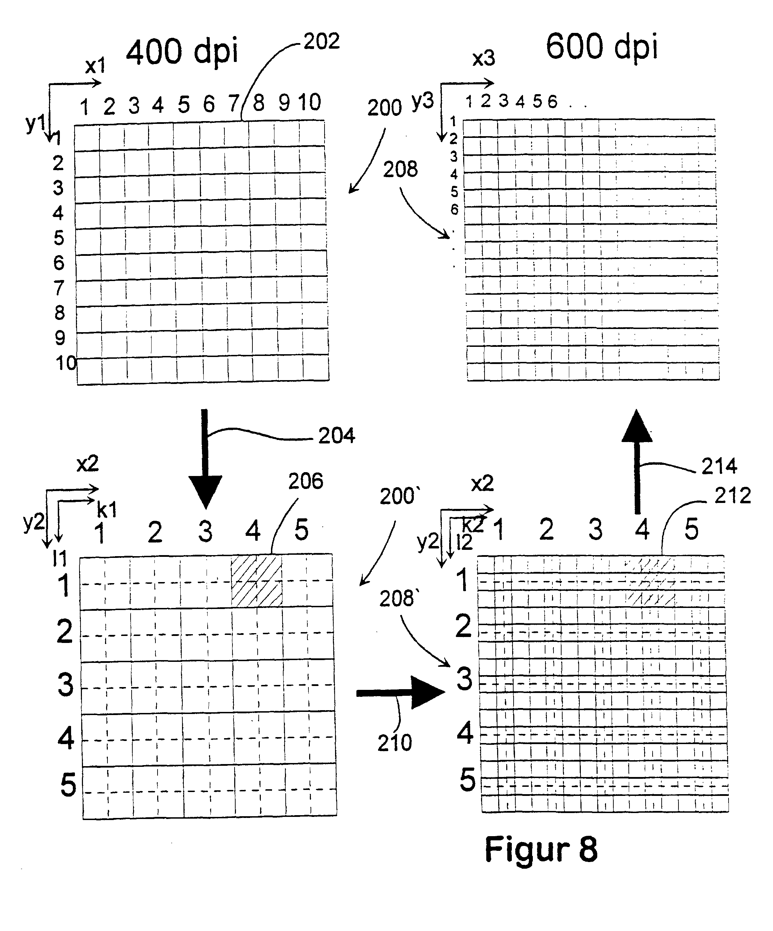

Figur 8 zeigt ein stark vergrößertes Quellbild 200 mit einer Auflösung von 400 dpi. Das Quellbild 200 enthält matrixförmig angeordnete, quadratische Quellbildelemente Q x1,y1, wobei x1 die Spaltennummer und y2 die Zeilennummer eines jeweiligen Quellbildelementes Q x1,x2 angibt. Z. B. wird ein Quellbildelement 202 auch als Q 7,1 bezeichnet, da es in der siebten Spalte und der ersten Zeile des Quellbildes 200 angeordnet ist. Jedem Quellbildelement Q x1,y1 ist ein nicht dargestelltes Quellbilddatum QD x1,y1 zugeordnet. Hat ein Quellbilddatum QD x1,y1 den numerischen Wert "0", so ist das zugehörige Quellbildelement Q x1,y1 weiß. Hat ein Quellbilddatum QD x1,y1 dagegen den numerischen Wert "1", so ist das zugehörige Quellbildelement Q x1,y1 schwarz.

Anhand der Figuren 8 bis 12 wird erläutert, wie aus dem Quellbild 200 ein Zielbild 208 mit einem Auflösung von 600 dpi erzeugt wird. In einem ersten Schritt werden wieder jeweils vier ein Quadrat bildende Quellbildelemente Q x1,y1 des Quellbildes 200 zu matrixförmig angeordneten Quellteilbildern QT x2,y2 zusammengefaßt. Dabei ist x2 die Spaltennummer eines jeweiligen Quellteilbildes QT x2,y2 und y2 die Zeilennummer eines jeweiligen Quellteilbildes QT x2,y2 in einem Quellbild 200'.

Das Quellbild 200' entsteht, wie durch einen Pfeil 204 angedeutet, durch das Zusammenfassen der Quellbildelemente Q x1,y1 zu den Quellteilbildern QT x2,y2. Im Vergleich zum Quellbild 200 ist das Quellbild 200' in Quellteilbilder QT x2,y2 unterteilt. Ein schraffiertes Quellteilbild 206 enthält die Quellbildelemente Q 6,1, Q 7,1, Q 6,2 und Q 7,2. Das Quellteilbild 206 wird auch als Quellteilbild QT 4,1 bezeichnet. Die Grenzen der Quellbildelemente Q x1,y1, die nicht mit den Grenzen der Quellteilbilder QT x2,y2 übereinstimmen, sind im Quellbild 200' durch Strichlinien dargestellt.

Der Zusammenhang der Spaltennummern x1 bzw. der Zeilennummern y1 im Quellbild 200 und der Quellteilbild-Spaltennummer x2 bzw. der Quellteilbild-Zeilennummer y2 wird durch die oben angegebenen Formeln (1) hergestellt. Bei der Bearbeitung der Quellteilbilder QT x2,y2 werden diese wiederum als aus dem Quellbild 200' herausgelöst betrachtet. Die Quellbildelemente Q x1,x2 bleiben somit weiterhin matrixförmig angeordnet, werden aber durch für alle Quellteilbilder QT x2,y2 gleiche Spaltennummern k1 bzw. Zeilennummern 11 bezeichnet. Dabei gelten die oben angegebenen Formeln (2) weiter.

Nach einer für alle Quellteilbilder QT x2,y2 gleichen Rechenvorschrift werden anschließend aus den jeweiligen Quellbilddaten QD k1,11 Zielbilddaten ZD k2,12 berechnet, die die Darstellung zugehöriger Zielbildelemente Z k2,12 festlegen. Die Zielbildelemente Z k2,12 sind in Zielteilbildern ZT x2,y2 matrixförmig anzuordnen. Dabei bezeichnet k2 die Spaltennummer und 12 die Zeilennummern der Zielbildelemente Z k2,12 im jeweiligen Zielteilbild ZT x2,y2. Die Zielbilddaten ZD k2,12 haben entweder den numerischen Wert "0" für Weiß oder "1" für Schwarz. Die Spaltennummern x2 bzw. die Zeilennummern y2 der Quellteilbilder QT x2,y2 stimmen mit den Spaltennummern x2 bzw. den Zeilennummern y2 der Zielteilbilder ZT x2,y2 überein. Somit sind auch die Zielteilbilder ZT x2,y2 matrixförmig angeordnet.

Aus dem Quellbild 200' entsteht, wie durch einen Pfeil 210 angedeutet, ein Zielbild 208'. Aus dem Quellteilbild 206 mit der Auflösung von 400 dpi wird z. B. ein Zielteilbild 212 mit einer Auflösung von 600 dpi erzeugt. Während das Quellteilbild 206 vier Quellbildelemente enthält, sind im Zielteilbild 212 neun Zielbildelemente enthalten. Das Quellteilbild 206 ist genauso groß wie das Zielteilbild 212. Somit beträgt das Verhältnis der Zahl von Quellbildelementen im Quellbild 206 zur Zahl der Zielbildelemente im Zielbild 212 2:3. Dies entspricht einer Erhöhung der Auflösung sowohl in Zeilenrichtung als auch in Spaltenrichtung von 400 dpi auf 600 dpi. Im Zielbild 208' sind die Grenzen von Zielbildelementen Z k2,12, die nicht mit den Grenzen von Zielteilbildern ZT x2,y2 übereinstimmen, durch dünne Linien dargestellt. Strichlinien verlaufen durch Zielbildelemente Z k2,12, die beim gedanklichen Übereinanderlegen des Quellbildes 200' auf das Zielbild 208' durch mehr als ein Quellbildelement Q x1,y1 bedeckt werden.

In einem dritten Schritt, der durch einen Pfeil 214 verdeutlicht wird, werden aus den lokalen Spaltennummern k2 bzw. Zeilennummern 12 Spaltennummern x3 und Zeilennummern y3 bezüglich des Zielbildes 208 gemäß der folgenden Formeln (7) berechnet:

$$x3 = k1 + (x2 - 1) \cdot 3$$

$$y3 = l1 + (y2 - 1) \cdot 3 \tag{7}$$

Die Zielbildelemente Z x3,y3 sind wiederum im Zielbild 208 matrixförmig angeordnet. Durch die Spaltennummer x3 bzw. die Zeilennummern y3 vereinfacht sich die weitere Bearbeitung der Zielbildelemente Z x3,y3 bzw. der zugehörigen Zielbilddaten ZD x3,y3. Durch positionsrichtiges Zusammenfügen der Zielteilbilder ZT x2,y2 entsteht als Resultat der Bearbeitung das Zielbild 208 mit der Auflösung von 600 dpi.

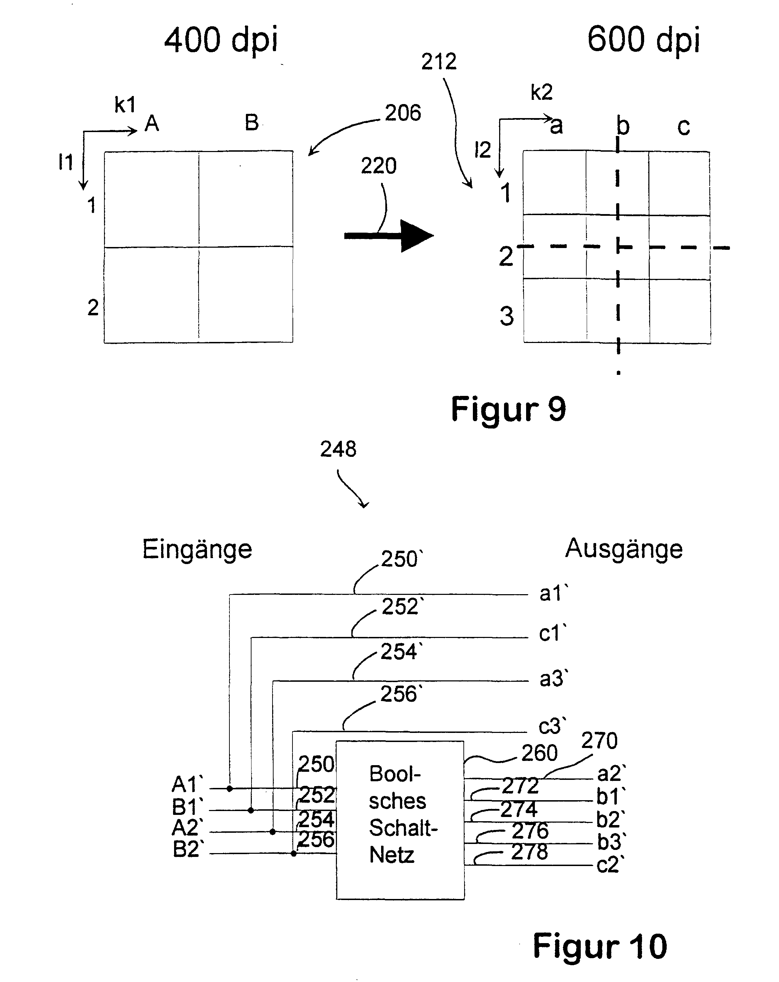

Figur 9 zeigt auf der linken Seite eine Vergrößerung des Quellteilbildes 206 mit 400 dpi. Ein Pfeil 220 verdeutlicht den Übergang vom Quellteilbild 206 zum Zielteilbild 212, das im rechten Teil der Figur 9 dargestellt ist und eine Auflösung von 600 dpi hat. Im folgenden wird zur Bezeichnung der Quellbildelemente Q k1,l1 und der Quellbilddaten QD k1,l1 im Quellteilbild 206 sowie zur Bezeichnung der Zielbildelemente Z k2,l2 und der Zielbilddaten ZD k2,l2 im Zielteilbild 212 die verkürzte Schreibweise verwendet. Somit werden die Quellbildelemente als A1 bis B2 und die Quellbilddaten als A1' bis B2' bezeichnet. Die Zielbildelemente werden als a1 bis c3 und die Zielbilddaten als a1' bis c3' bezeichnet.

Figur 10 zeigt eine Schaltungsanordnung 248 zum Erhöhen der Auflösung von 400 dpi im Quellteilbild 206 auf 600 dpi im Zielteilbild 212. Beim Erläutern der Figur 10 wird deshalb auch auf die Figur 9 Bezug genommen. Mit Leitungen 250, 252, 254 bzw. 256 werden die Quellbilddaten A1', B1', C1' bzw. D1' in einen Schaltungsblock 260 eingegeben. Von der Leitung 250 zweigt eine Leitung 250' ab, so daß das Quellbilddatum A1' mit der Leitung 250' am Schaltungsblock 260 vorbei als Zielbilddatum a1' übernommen wird. Die Leitung 250' realisiert somit die logische Operation der Identität. Ebenso verzweigt von der Leitung 252, 254 bzw. 256 eine Leitung 252', 254' bzw. 256'. Die Leitung 252' dient zum Übernehmen des Quellbilddatums B1' als Zielbilddatum c1'. Mit der Leitung 254' bzw. 256' wird das Quellbilddatum A2' bzw. B2' als Zielbilddatum a3' bzw. c3' übernommen.

Der Schaltungsblock 260 hat fünf Ausgangsleitungen 270 bis 278 auf denen jeweils ein Zielbilddatum a2', b1', b2', b3' bzw. c2' ausgegeben wird. Im Schaltungsblock 250 werden die Zielbilddaten a1', a2', b1' bis b3' und c2' nach folgenden Formeln (8) berechnet:

    a1' = A1', c1' = B1', a3' = A2', c3' = B2'
    a2' = A1' || A2' && (!A1' && !B1' && !B2')
    b1' = B1' || A1' && (!B1' && !A2' && !B2')
    b2' = (A1' && B1') || (A1' && A2') || (A1' && B2') || (B1' && A2') || (B1' && B2') || (A2' && B2')
    b3' = A2' || B2' && (!A1' && !B1' && !A2')
    c2' = B2' || B1' && (!A1' && !A2' && !B2')

wobei die Operatoren "||", "&&" und "!" in dieser Reihenfolge wiederum die ODER-Verknüpfung, die UND-Verknüpfung und die logische Negation bezeichnen.

Zum Beispiel erhält das Zielbilddatum a2' den numerischen Wert "1" (schwarz), wenn zumindest das Quellbildelement A1 schwarz ist oder wenn nur das Quellbildelement A2' schwarz ist. Das Zielbilddatum b2' erhält den numerischen Wert "1" nur dann, wenn mindestens zwei Quellbildelemente in einem Quellteilbild den numerischen Wert "1" (schwarz) haben.

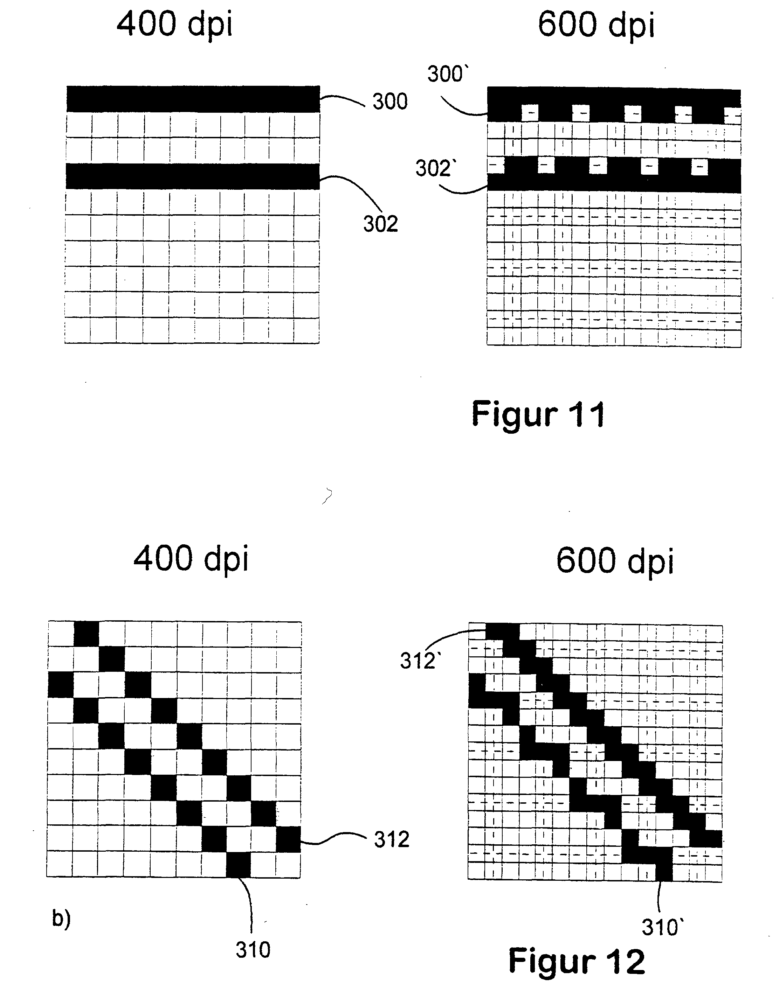

Figur 11 zeigt ein Beispiel für das Erhöhen der Auflösung von 400 dpi auf 600 dpi mit den oben angegebenen Formeln (8). Horizontale Linien 300 und 302 mit einer Linienbreite von jeweils einem schwarzen Bildelement werden zu horizontalen Linien 300' bzw. 302', die jeweils auf einer Seite einen ausgedünnten Rand haben.

Figur 12 zeigt das Erhöhen der Auflösung von 400 dpi auf 600 dpi für diagonale Linien 310 und 312. Dabei werden ebenfalls die oben angegebenen Formeln (8) sowie die Schaltungsanordnung gemäß Figur 10 verwendet. Aus der diagonalen Linie 310 entsteht eine diagonale Linienstruktur 310'. Eine etwas andere Linienstruktur 312' entsteht aus der Linie 312. Die Gründe für die Abweichung der Linienstrukturen 310' und 312' voneinander sind dieselben, die oben für die diagonalen Linienstrukturen 122' und 124' (vgl. Figur 7) angegeben wurden. Beide Linienstrukturen 310' und 312' sind zusammenhängende Strukturen bezüglich der schwarzen Zielbildelemente Z x3,y3.

Wenn die Linie 102 in Figur 5 in einem elektrofotografischen Drucker beispielsweise mittels Leuchtdioden (LED's) in einem 240 dpi-Raster punktweise auf die Fotoleitertrommel belichtet und entwickelt wird, so entsteht aufgrund des elektrofotografischen Prozesses die. Linie 401 auf dem Aufzeichnungsträger (Papier) eine wellenförmige Linie. Der Aufzeichnungsprozess bewirkt, daß die Linie an ihrem Rand wellenförmig ist. Da das menschliche Auge eine begrenzte Auflösungsfähigkeit besitzt, mittelt es beim Betrachten der Linie über die Wellenstruktur und nimmt eine Linienbreite $s_1$ wahr. Die Linie Kann gemäß der Erfindung in einem 600 dpi-Raster dargestellt werden. Aus den Bilddaten der Linie (240 dpi) werden dabei die Daten der Struktur (600 dpi) erzeugt. Werden diese Daten auf einem elektrofotografischen Drucker mit 600 dpi Auflösung wiedergegeben, so entsteht eine Struktur mit wellenartigen Rändern. Das menschliche Auge mittelt beim Betrachten dieser Struktur ebenfalls über die Wellen, wodurch die Linienbreite $s_2$ wahrgenommen wird. Bei geeigneter Wahl der Periodizität gilt: $s_1 = s_2$.

Das Verfahren zur Veränderung der Auflösung wird auch zur Veränderung der Größe des Zielbildes gegenüber der Größe der Quellbilder eingesetzt. In diesem Fall sind Zielbildelemente und Quellbildelemente gleich groß. Die Verfahrensschritte bleiben jedoch gleich.

Bezugszeichenliste

| | |
|---|---|
| 10, 10' | Quellbild |
| 12 | Quellbildelement |
| Q x1,x2 | Quellbildelement |
| QD x1,x2 | Quellbilddatum |
| QT x1,x2 | Quellteilbild |
| 14,14' | Zielbild |
| 16 | Pfeil |
| 18 | Quellteilbild |
| Q k1,11 | Quellbildelement |
| QD k1,11 | Quellbilddatum |
| ZD k2,12 | Zielbilddatum |
| Z k2,12 | Zielbildelement |
| ZT x2,y2 | Zielteilbild |
| 22 | Zielteilbild |
| 24 | Pfeil |
| 26 | Zielbild |
| 30 | Pfeil |
| 32, 34 | Strichlinie |
| A1 bis B2 | entspricht Q A,1 bis Q B2 |
| a1 bis e5 | entspricht Z a,1 bis Z e,5 |
| A1' bis B2' | entspricht QD A,1 bis QD B,2 |
| a1' bis e5' | entspricht ZD a,1 bis ZD e,5 |
| 50 | Schaltungsanordnung |
| 52 bis 58 | Eingangsleitung |
| 60 | Schaltungsblock |
| 62 bis 68 | Leitung |
| 70 | Ausgangsbus |
| 72, 74 | Ausgangsleitung |
| A bis D | Flächenbereich (Quellteilbild) |
| A' bis D' | Flächenbereich (Zielteilbild) |
| 100 | Quellbild |
| 102, 104 | horizontale Linie |
| I | Erste Variante |
| II | Zweite Variante |
| 102', 104' | Linie mit zinnenartigem Rand |
| 106 | Zielbild |
| 108 | Quellteilbild |
| 108' | Zielteilbild |
| 110 | Quellteilbild |
| 110' | Zielteilbild |
| 120 | Quellbild |
| 122, 124 | Diagonale Linie |
| 122', 124' | Diagonale Linienstruktur |
| 126 | Zielbild |
| 128 | Quellteilbild |
| 128' | Zielteilbild |
| 130 | Quellteilbild |
| 130' | Zielteilbild |

| | |
|---|---|
| 132 | Pfeil |
| 200, 200' | Quellbild |
| 202 | Quellbildelement |
| 204 | Pfeil |
| 206 | Quellteilbild |
| 208, 208' | Zielbild |
| 210 | Pfeil |
| 212 | Zielteilbild |
| 214 | Pfeil |
| 220 | Pfeil |
| 248 | Schaltungsanordnung |
| 250 bis 256 | Leitung |
| 260 | Schaltungsblock |
| 250' bis 256' | Leitung |
| 270 bis 280 | Leitung |
| 300, 302 | horizontale Linie |
| 300', 302' | horizontale Linienstruktur |
| 310, 312 | diagonale Linie |
| 310', 312' | diagonale Linienstruktur |
| 400 | Linie im 240 dpi-Raster |
| 401 | wiedergegebene Linie im 240 dpi-Raster |
| 402, 405 | Wellenstruktur |
| 403 | ausgedünnte Linie im 600 dpi-Raster |
| 404 | wiedergegebene Struktur im 600 dpi-Raster |

**Patentansprüche**

1. Verfahren zum Bearbeiten von Bilddaten insbesondere in einem Drucker,
   bei dem ein zu bearbeitendes Quell-Bild (10, 10') matrixförmig angeordnete Quell-Bildelemente enthält, denen jeweils ein Quell-Bilddatum zugeordnet ist, welches die Darstellung des jeweiligen Quell-Bildelements (12, 12') festlegt,
   ein bei der Bearbeitung entstehendes Ziel-Bild (14, 14') matrixförmig angeordnete Ziel-Bildelemente (25) enthält, denen jeweils ein Ziel-Bilddatum zugeordnet ist, welches die Darstellung des jeweiligen Ziel-Bildelementes (14, 14') festlegt,
   das Quell-Bild (10, 10') eine vorgegebene erste Auflösung entsprechend einem Quellraster und das Ziel-Bild (14, 14') eine von der ersten Auflösung abweichende, um einen Umsetzungsfaktor verschiedene zweite Auflösung entsprechend einem Zielraster hat und wobei das Quell-Bild (10, 10') in matrixförmig angeordnete Quell-Teilbilder (18) unterteilt wird,
   für jedes Quell-Teilbild (18) aus den Quell-Bilddaten die Ziel-Bilddaten eines zugehörigen Ziel-Teilbildes (22) nach für alle Teilbilder (18, 22) gleichen Rechenoperationen ermittelt werden,
   wobei das jeweilige Ziel-Teilbild (22) an einer Position im Ziel-Bild (14, 14') angeordnet ist, welche mit der Position des zugehörigen Quell-Teilbildes (18) im Quell-Bild (10, 10') übereinstimmt und wobei
   die Umsetzung derart erfolgt, daß eine Linie (102', 104') mit nicht ganzzahliger Linienbreite im Zielraster dargestellt wird, indem sie im Zielraster ausgedünnt wird.

2. Verfahren nach Anspruch 1, **dadurch gekennzeichnet, daß** die Linie (102', 104') mit nicht ganzzahliger Linienbreite im Zielraster mit einer ganzzahligen Periodizität ausgedünnt wird, wobei die Periodizität insbesondere ein ganzzahliges Vielfaches des Umsetzungsfaktors ist.

3. Verfahren nach Anspruch 1 oder 2, **dadurch gekennzeichnet, daß** bei einer Umsetzung der Bilddaten um einen Umsetzungsfaktor von 2,5, insbesondere bei einer Umsetzung von einem 240 dpi Quellraster auf ein 600 dpi Zielraster, eine halbe Linienbreite im Zielraster dargestellt wird indem die Linie mit einer Periodizität von fünf ausgedünnt wird.

4. Verfahren nach einem der vorhergehenden Ansprüche, **dadurch gekennzeichnet, daß** die Eilddaten binäre Daten sind und daß die Rechenoperationen der Bool'schen Algebra verwendet werden.

5. Verfahren nach einem der vorhergehenden Ansprüche, **dadurch gekennzeichnet, daß** der Umsetzungsfaktor zwischen der ersten und der zweiten Auflösung nicht ganzzahlig ist.

6. Verfahren nach einem der vorhergehenden Ansprüche, **dadurch gekennzeichnet, daß** der Umsetungsfaktor zwischen der ersten und der zweiten Auflösung 2:5 beträgt,
die Quell-Teilbilder (18) quadratisch sind und vier Quell-Bildelemente (12) enthalten,
die Ziel-Teilbilder (22) quadratisch sind und jeweils fünfundzwanzig Ziel-Bildelemente (26) enthalten, und daß folgende Rechenoperationen durchgeführt werden:

$a1' = A1', a2' = A1', b1' = A1', b2' = A1', b3' = A1', c1' = A1',$
$c2' = B1', d1' = B1', d2' = B1', e1' = B1', e2' = B1', e3' = B1',$
$a3' = A2', a4' = A2', a5' = A2', b4' = A2', b5' = A2', c4' = A2',$
$c5' = B2', d3' = B2', d4' = B2', d5' = B2', e4' = B2', e5' = B2',$
$c3' = A1'\ \&\&\ B1'\ \&\&\ A2'\ \&\&\ B2'$
oder
$c3' = A1'\ ||\ B1'\ ||\ A2'\ ||\ B2'$

oder daß folgende Rechenoperationen durchgeführt werden:

$a1' = A1', a2' = A1', b1' = A1', b2' = A1', b3' = A1',$
$c2' = B1', d1' = B1', d2' = B1', e1' = B1', e2' = B1',$
$a4' = A2', a5' = A2', b4' = A2', b5' = A2', c4' = A2',$
$d3' = B2', d4' = B2', d5' = B2', e4' = B2', e5' = B2',$
$a3' = A2'\ ||\ A1'\ \&\&\ (!B1'\ ||\ !A2'\ ||\ !B2')$
$c1' = A1'\ ||\ B1'\ \&\&\ (!A1'\ \&\&\ !A''' \ \&\&\ !B2')$
$c3' = (A1'\ \&\&\ B1')\ ||\ (A1'\ \&\&\ A2')\ ||\ (A1'\ \&\&\ B2')\ ||\ (B1'\ \&\&\ A2')\ ||\ (B1'\ \&\&\ B2')\ ||\ (A2'\ \&\&\ B2')$
$c5' = B2'\ ||\ A2'\ \&\&\ (!A1'\ \&\&\ !B1'\ \&\&\ !B2')$
$e3' = B1'\ ||\ B2'\ \&\&\ (!A1'\ \&\&\ !B1'\ \&\&\ !A2')$

oder daß folgende Rechenoperationen durchgeführt werden:

$a1' = A1', a2' = A1', b1' = A1', b2' = A1',$
$d1' = B1', d2' = B1', e1' = B1', e2' = B1',$
$a4' = A2', a5' = A2', b4' = A2', b5' = A2',$
$d4' = B2', d5' = B2', e4' = B2', e5' = B2',$
$c1' = A1'\ \&\&\ B1'\ ||\ B1'\ \&\&\ !A2'\ ||\ A1'\ \&\&\ !B2'$
$c2' = A1'\ \&\&\ B1'\ ||\ A1'\ \&\&\ B2'\ ||\ B1'\ \&\&\ A2'$
$a3' = A1'\ \&\&\ A2'\ ||\ A1'\ \&\&\ !B2'\ ||\ !B1'\ \&\&\ A2'$
$b3' = A1'\ \&\&\ B2'\ ||\ A1'\ \&\&\ A2'\ ||\ B1'\ \&\&\ A2'$
$c3' = A1'\ \&\&\ B1'\ ||\ A1'\ \&\&\ A2'\ ||\ A1'\ \&\&\ B2'\ ||\ B1'\ \&\&\ A2'\ ||\ B1'\ \&\&\ B2'\ ||\ A2'\ \&\&\ B2'$
$d3' = A1'\ \&\&\ B2'\ ||\ B1'\ \&\&\ A2'\ ||\ B1'\ \&\&\ B2'$
$e3' = !A1\ \&\&\ B2'\ ||\ B1'\ \&\&\ !A2'\ ||\ B1'\ \&\&\ B2'$
$c4' = A1'\ \&\&\ B2'\ ||\ B1'\ \&\&\ A2'\ ||\ A2'\ \&\&\ B2'$
$c5' = !A1'\ \&\&\ B2'\ ||\ !B1\ \&\&\ A2'\ ||\ A2'\ \&\&\ B2'$

wobei "||" eine ODER-Verknüpfung, "&&" eine UND-Verknüpfung und "!" die Negation bezeichnen,
A1 bis B2 die matrixförmig angeordneten Quellbildelemente sind, deren Spaltenposition durch Großbuchstaben und deren Zeilenposition innerhalb der Matrix durch Ziffern angegeben wird,
a1 bis e5 die ebenfalls matrixförmig angeordneten Ziel-Bildelemente sind, deren Spaltenposition durch Kleinbuchstaben und deren Zeilenposition innerhalb der Matrix durch Ziffern angegeben wird,
und wobei das zu einem Bildelement (12, 26) gehörende Bilddatum durch die Spaltenposition und die Zeilenposition des betreffenden Bildelementes (12, 26) und einen hochgestellten Strich bezeichnet wird.

7. Verfahren nach einem der Ansprüche 1 bis 5, **dadurch gekennzeichnet, daß** das Teilungsverhältnis der ersten Auflösung und der zweiten Auflösung 2:3 beträgt,
die Quell-Teilbilder (18) quadratisch sind und jeweils vier Quell-Bildelemente (12) enthalten,
die Ziel-Teilbilder (22) quadratisch sind und jeweils neun Ziel-Bildelemente (26) enthalten,
und daß folgende Rechenoperationen durchgeführt werden:

a1' = A1', c1' = B1', a3' = A2', c3' = B2'
a2' = A1' || A2' && (!A1' && !B1' && !B2')
b1' = B1' || A1' && (!B1' && !A2' && !B2')
b2' = (A1' && B1') || (A1' && A2') || (A1' && B2') || (B1' && A2') || (B1' && B2') || (A2' && B2')
b3' = A2' || B2' && (!A1' && !B1' && !A2')
c2' = B2' || B1' && (!A1' && !A2' && !B2')

wobei "||" die ODER-Verknüpfung, "&&" die UND-Verknüpfung und "!" die logische Negation symbolisieren,
A1 bis B2 die matrixförmig angeordneten Quellbildelemente sind, deren Spaltenposition durch Großbuchstaben und deren Zeilenposition innerhalb der Matrix durch Ziffern angegeben wird,
a1 bis c3 die ebenfalls matrixförmig angeordneten Ziel-Bildelemente sind, deren Spaltenposition durch Kleinbuchstaben und deren Zeilenposition innerhalb der Matrix durch Ziffern angegeben wird,
und wobei das zu einem Bildelement (12, 26) gehörende Bilddatum durch dessen Spaltenposition und Zeilenposition mit einem hochgestellten Strich bezeichnet wird.

8. Verfahren nach einem der vorhergehenden Ansprüche, **dadurch gekennzeichnet, daß** zumindest diagonale Linien (122, 124) mit der Breite eines Quell-Bildelement im Ziel-Bild als diagonale Anordnung (122', 124') von Bildpunkten dargestellt wird, bei der die Ziel-Bildelemente entlang der diagonalen Richtung zusammenhängen.

9. Schaltungsanordnung zum Bearbeiten von Bilddaten, insbesondere in einem Drucker, mit
einer Vorbereitungseinheit (50) zum Auswählen von Quell-Bilddaten, welche die Darstellung von matrixförmig angeordneten Quell-Bildelementen eines Quell-Bildes (10, 10') festlegen,
wobei jeweils eine vorbestimmte Anzahl von Quell-Bilddaten zu im Quell-Bild (10, 10') matrixförmig angeordneten Quell-Teilbildern (18) ausgewählt wird,
und mit einer Umsetzungseinheit (60, 260) zum Erzeugen von Ziel-Bilddaten zum Festlegen der Darstellung von matrixförmig angeordneten Ziel-Bildelementen in einem Ziel-Teilbild (22) aus den ausgewählten Quell-Bilddaten,
wobei sich die Anzahl von Quell-Bilddaten je Quell-Teilbild (18) und die Anzahl von Ziel-Bilddaten je Ziel-Teilbild (22) unterscheidet,
wobei das jeweilige Ziel-Teilbild (22) an einer Position im Ziel-Bild (14, 14') angeordnet ist, welche mit der Position des zugehörigen Quell-Teilbildes (18) im Quell-Bild (10, 10') übereinstimmt,
wobei das Quell-Bild (10, 10') eine vorgegebene erste Auflösung entsprechend einem Quellraster und das Ziel-Bild (14, 14') eine von der ersten Auflösung abweichende, um einen Umsetzungsfaktor verschiedene zweite Auflösung entsprechend einem Zielraster hat und
wobei die Umsetzung derart erfolgt, daß eine Linie (102', 104') mit nicht ganzzahliger Linienbreite im Zielraster dargestellt wird, indem sie im Zielraster ausgedünnt wird.

10. Schaltungsanordnung nach Anspruch 9, **gekennzeichnet durch** eine Ausgabeeinheit, vorzugsweise eine Druckereinheit für eine fest vorgegebene Auflösung,
wobei die Ausgabeeinheit ein Ziel-Bild (14, 14') ausgibt, in dem ein jeweiliges Ziel-Teilbild (22) an einer Position im Ziel-Bild (14, 14') angeordnet ist, welche mit der Position des zugehörigen Quell-Teilbildes (18) im Quell-Bild (10, 10') übereinstimmt.

11. Drucker mit einer Schaltungsanordnung zum Bearbeiten von Bilddaten nach Anspruch 9 oder 10.

**Claims**

1. Method for processing image data, particularly in a printer,
wherein a source image (10, 10') to be processed contains source picture elements arranged matrix-like, to which source picture elements a respective source image datum is allocated which defines the presentation of the respective source picture element (12, 12'),
a target image (14, 14') arising in the processing contains target picture elements (25) arranged matrix-like, to which target picture elements a respective target image datum is allocated which defines the presentation of the respective target picture element (14, 14'),
the source image (10, 10') has a predetermined first resolution corresponding to a source raster and the target image (14, 14') has a second resolution deviating from the first resolution and different by a conversion factor, which second resolution corresponds to a target raster and wherein the source image (10, 10') is subdivided into source sub-images (18) arranged matrix-like,

the target image data of an associated target sub-image (22) are determined for each source sub-image (18) from the source image data according to the same calculating operations for all sub-images (18, 22),

wherein the respective target sub-image (22) is arranged at a position in the target image (14, 14'), which position coincides with the position of the associated source sub-image (18) in the source image (10, 10'), and wherein the conversion ensues such that a line (102', 104') having a non-whole-numbered line width is presented in the target raster in that it is thinned in the target raster.

2. Method according to claim 1, **characterized in that** the line (102', 104') having a non-whole-numbered line width is thinned in the target raster with a whole-numbered periodicity, the periodicity being, in particular, a whole multiple of the conversion factor.

3. Method according to claim 1 or 2, **characterized in that**, given a conversion of the image data by a conversion factor of 2.5, particularly given a conversion from a 240 dpi source raster onto a 600 dpi target raster, half a line width in the target raster is presented **in that** the line is thinned with a periodicity of five.

4. Method according to one of the preceding claims, **characterized in that** the image data are binary data and **in that** the calculating operations of Boolean algebra are employed.

5. Method according to one of the preceding claims, **characterized in that** the conversion factor between the first and the second resolution is not a whole number.

6. Method according to one of the preceding claims, **characterized in that** the conversion factor between the first and the second resolution amounts to 2:5,

the source sub-images (18) are quadratic and contain four source picture elements (12),

the target sub-images (22) are quadratic and respectively contain twenty five target picture elements (26) and **in that** the following calculating operations are implemented:

a1' = A1', a2" = A1', b1' = A1', b2' = A1', b3' = A1', c1' = A1',
c2' = B1', d1' = B1', d2' = B1', e1' = B1', e2' = B1', e3' = B1',
a3' = A2', a4' = A2', a5' = A2', b4' = A2', b5" = A2', c4' = A2',
c5' = B2', d3' = B2', d4' = B2', d5' = B2', e4' = B2',
e5' = B2',
c3' = A1' && B1' && A2' && B2'
or
c3' = A1' || B1' || A2' || B2'

or **in that** the following calculating operations are implemented:

a1' = A1', a2' = A1', b1' = A1', b2' = A1', b3' = A1',
c2' = B1', d1' = B1', d2' = B1', e1' = B1', e2' = B1',
a4' = A2', a5' = A2', b4' = A2', b5' = A2', c4' = A2',
d3' = B2', d4' = B2', d5' = B2', e4' = B2', e5' = B2',
a3' = A2' || A1' && (!B1' || !A2' || !B2')
c1' = A1' || B1' && (!A1' && !A" ' && !B2')
c3' = (A1' && B1') || (A1' && A2') || (A1' && B2') || (B1' && A2') || (B1' && B2') || (A2' && B2')
c5' = B2' || A2' && (!A1' && !B1' && !B2')
e3' = B1' || B2' && (!A1' && !B1' && !A2')

or **in that** the following calculating operations are implemented:

a1' = A1', a2' = A1', b1' = A1', b2' = A1',
d1' = B1', d2' = B1', e1' = B1', e2' = B1',
a4' = A2', a5' = A2', b4' = A2', b5' = A2',
d4' = B2', d5' = B2', e4' = B2', e5' = B2',
c1' = A1' && B1' || B1' && !A2' || A1' && !B2'
c2' = A1' && B1' || A1'&&B2' || B1' && A2'
a3' = A1' && A2' || A1' && !B2' || !B1' && A2'
b3' = A1' && B2' || A1' && A2' || B1' && A2'

c3' = A1' && B1' || A1' && A2' || A1' && B2' || B1' && A2' || B1' && B2' || A2' && B2'
d3' = A1' && B2' || B1' && A2' || B1' && B2'
e3' = !A1 && B2' || B1' && !A2' || B1' && B2'
c4' = A1' && B2' || B1' && A2' || A2' && B2'
c5' = !A1' && B2' || !B1 && A2' || A2' && B2'

wherein "||" indicates an OR operation, "&&" indicates an AND operation and "!" indicates the negation,
A1 to B2 are the source picture elements arranged matrix-like, the column position of which is indicated by upper case letters and the row position of which within the matrix is indicated by numbers,
a1 to e5 are the target picture elements that are likewise arranged matrix-like, the column position of which is indicated with lower case letters and the row position of which within the matrix is indicated by numbers,
and wherein the image datum belonging to a picture element (12, 26) is referenced by the column position and the row position of the associated picture element (12, 26) and a raised prime.

7.  Method according to one of the claims 1 to 5, **characterized in that** the division ratio of the first resolution and the second resolution amounts to 2:3,
    the source sub-images (18) are quadratic and respectively contain four source picture elements (12),
    the target sub-images (22) are quadratic and respectively contain nine target picture elements (26),
    and **in that** the following calculating operations are implemented:

    a1' = A1', c1' = B1', a3' = A2', c3' = B2'
    a2' = A1' || A2' && (!A1' && !B1' && !B2')
    b1' = B1' || A1' && (!B1' && !A2' && !B2')
    b2' = (A1' && B1') || (A1' && A2') || (A1' && B2') || (B1' && A2') || (B1' && B2') || (A2' && B2')
    b3' = A2' || B2' && (!A1' && !B1' && !A2')
    c2' = B2' || B1' && (!A1' && !A2' && !B2')

    wherein "||" symbolizes the OR operation, "&&" symbolizes the AND operation and "!" symbolizes the logical negation,
    A1 to B2 are the source picture elements arranged matrix-like, the column position of which is indicated by upper case letters and the row position of which within the matrix is indicated by numbers,
    a1 to c3 are the target picture elements likewise arranged matrix-like, the column position of which is indicated with lower case letters and the row position of which within the matrix is indicated by numbers,
    and wherein the image datum belonging to a picture element (12, 26) is referenced by the column position and the row position thereof with a raised prime.

8.  Method according to one of the preceding claims, **characterized in that** at least diagonal lines (122, 124) having the width of a source picture element are presented in the target image as diagonal arrangement (122', 124') of picture elements, in which the target picture elements are interconnected along the diagonal direction.

9.  Circuit arrangement for processing image data, particularly in a printer, comprising
    a preparation unit (50) for selecting source image data that determine the presentation of matrix-like arranged source picture elements of a source image (10, 10'),
    a respectively predetermined number of source image data being selected for source sub-images (18) arranged matrix-like in the source image (10, 10'),
    and comprising a conversion unit (60, 260) for generating target image data for defining the presentation of matrix-like arranged target picture elements in a target sub-image (22) from the selected source image data,
    wherein the number of source image data per source sub-image (18) and the number of target image data per target sub-image (22) differ,
    wherein the respective target sub-image (22) is arranged at a position in the target image (14, 14'), which position coincides with the position of the associated source sub-image (18) in the source image (10, 10'),
    wherein the source image (10, 10') has a predetermined first resolution corresponding to a source raster and the target image (14, 14') has a second resolution deviating from the first resolution and different by a conversion factor, which second resolution corresponds to a target raster, and
    wherein the conversion ensues such that a line (102', 104') having a non-whole-numbered line width is presented in the target raster in that it is thinned in the target raster.

10. Circuit arrangement according to claim 9, **characterized by** an output unit, preferably a printer unit for a predetermined resolution,

wherein the output unit outputs a target image (14, 14') in which a respective target sub-image (22) is arranged at a position in the target image (14, 14'), which position coincides with the position of the associated source sub-image (18) in the source image (10, 10').

**11.** Printer having a circuit arrangement for processing image data according to claim 9 or 10.


**Revendications**

**1.** Procédé de traitement de données-image, notamment dans une imprimante, où

une image source (10, 10') à traiter contient des éléments d'image source disposés en forme de matrice, auxquels est respectivement affectée une donnée d'image source qui détermine la représentation de l'élément d'image source (12, 12') respectif,

une image cible (14, 14'), obtenue lors du traitement, contient des éléments d'image cible (25) disposés en forme de matrice, auxquels est respectivement affectée une donnée d'image cible qui détermine la représentation de l'élément d'image cible (14, 14') respectif,

l'image source (10, 10') présente une première résolution définie selon une trame source, et l'image cible (14, 14') présente une deuxième résolution différente de la première résolution d'un facteur de conversion selon une trame cible, l'image source (10, 10') étant divisée en images sources partielles (18) disposées en forme de matrice,

pour chaque image source partielle (18) les données-image cibles d'une image cible partielle (22) associée sont déterminées à partir des données-image sources selon des opérations de calcul identiques pour toutes les images partielles (18, 22),

l'image cible partielle (22) respective étant disposée à une position dans l'image cible (14, 14') qui correspond à la position de l'image source partielle (18) associée dans l'image source (10, 10'), et

la conversion est faite de telle façon qu'une ligne (102', 104') d'une largeur de ligne à nombres non entiers soit représentée dans la trame cible en l'éclaircissant dans la trame cible.

**2.** Procédé selon la revendication 1, **caractérisé en ce que** la ligne (102', 104') d'une largeur de ligne à nombres non entiers est éclaircie dans la trame cible avec une périodicité à nombres entiers, la périodicité étant notamment un multiple entier du facteur de conversion.

**3.** Procédé selon la revendication 1 ou 2, **caractérisé en ce que**, lors de la conversion des données-image d'un facteur de conversion de 2,5, notamment lors d'une conversion depuis une trame source de 240 dpi en une trame cible de 600 dpi, une demie largeur de ligne est représentée dans la trame cible en éclaircissant la ligne avec une périodicité de cinq.

**4.** Procédé selon l'une des revendications précédentes, **caractérisé en ce que** les données-image sont des données binaires, et que l'on utilise les opérations de calcul de l'algèbre de Boole.

**5.** Procédé selon l'une des revendications précédentes, **caractérisé en ce que** le facteur de conversion entre la première et la deuxième résolutions n'est pas à nombres entiers.

**6.** Procédé selon l'une des revendications précédentes, **caractérisé en ce que** le facteur de conversion entre la première et la deuxième résolutions est de 2 : 5,

que les images sources partielles (18) sont carrées et contiennent quatre éléments d'image source (12),

que les images cibles partielles (22) sont carrées et contiennent respectivement vingt-cinq éléments images cibles (26), et que les opérations de calcul suivantes sont réalisées :

$a1' = A1'$, $a2' = A1'$, $b1' = A1'$, $b2' = A1'$, $b3' = A1'$, $c1' = A1'$,
$c2' = B1'$, $d1' = B1'$, $d2' = B1'$, $e1' = B1'$, $e2' = B1'$, $e3' = B1'$,
$a3' = A2'$, $a4' = A2'$, $a5' = A2'$, $b4' = A2'$, $b5' = A2'$, $c4' = A2'$,
$c5' = B2'$, $d3' = B2'$, $d4' = B2'$, $d5' = B2'$, $e4' = B2'$, $e5' = B2'$,
$c3' = A1' \,\&\&\, B1' \,\&\&\, A2' \,\&\&\, B2'$
ou
$c3' = A1' \,||\, B1' \,||\, A2' \,||\, B2'$

ou que les opérations de calcul suivantes sont réalisées :

a1' = A1', a2' = A1', b1' = A1', b2' = A1', b3"= A1',
c2' = B1', d1' = B1', d2' = B1', e1' = B1', e2' = B1',
a4' = A2', a5' = A2', b4' = A2', b5' = A2', c4' = A2',
d3' = B2', d4' = B2', d5' = B2', e4' = B2', e5' = B2',
a3' = A2' || A1' && (!B1' || !A2' || !B2')
c1' = A1' || B1' && (!A1' && !A"' && !B2')
c3' = (A1' && B1') || (A1' && A2') || (A1' && B2') || (B1' && A2') || (B1' && B2') || (A2' && B2')
c5' = B2' || A2' && (!A1' && !B1' && !B2')
e3' = B1' || B2' && (!A1' && !B1' && !A2')


ou que les opérations de calcul suivantes sont réalisées :

a1' = A1', a2' = A1', b1' = A1', b2' = A1',
d1' = B1', d2' = B1', e1' = B1', e2' = B1',
a4' = A2', a5' = A2', b4' = A2', b5' = A2',
d4' = B2', d5' = B2', e4' = B2', e5' = B2'
c1' = A1' && B1' || B1' && !A2' || A1' && !B2'
c2' = A1' && B1' || A1' && B2' || B1' && A2'
a3' = A1' && A2' || A1' && !B2' || !B1' && A2'
b3' = A1' && B2' || A1' && A2' || B1' && A2'
c3' = A1' && B1' || A1' && A2' || A1' && B2' || B1' && A2' || B1' && B2' || A2' && B2'
d3' = A1' && B2' || B1' && A2' || B1' && B2'
e3' = !A1' && B2' || B1' && !A2' || B1' && B2'
c4' = A1' && B2' || B1' && A2' || A2' && B2'
c5' = !A1' && B2' || !B1' && A2' || A2' && B2'


où « || » désigne un opérateur OU, « && » désigne un opérateur ET et « ! » désigne la négation,
A1 à B2 étant les éléments d'image source disposés en forme de matrice, dont la position dans la colonne est indiquée par des majuscules et dont la position sur la ligne à l'intérieur de la matrice est indiquée par des chiffres,
a1 à e5 étant les éléments d'image cible disposés également en forme de matrice, dont la position dans la colonne est indiquée par des minuscules et dont la position sur la ligne à l'intérieur de la matrice est indiquée par des chiffres,
et la donnée-image associée à un élément d'image (12, 26) étant désignée par la position dans la colonne et la position sur la ligne de l'élément d'image (12, 26) concerné et par un trait vertical.

7. Procédé selon l'une des revendications 1 à 5, **caractérisé en ce que** le rapport de division de la première résolution et de la deuxième résolution est de 2 : 3,
que les images sources partielles (18) sont carrées et contiennent respectivement quatre éléments d'image source (12),
que les images cibles partielles (22) sont carrées et contiennent respectivement neuf éléments d'image cible (26),
et que l'on réalise les opérations de calcul suivantes :

a1' = A1', c1' = B1', a3' = A2', c3' = B2'
a2' = A1' || A2' && (!A1' && !B1' && !B2')
b1' = B1' || A1' && (!B1' && !A2' && !B2')
b2' = (A1' && B1') || (A1' && A2') || (A1' && B2') || (B1' && A2') || (B1' && B2') || (A2' && B2')
b3' = A2' || B2' && (!A1' && !B1' && !A2')
c2' = B2' || B1' && (!A1' && !A2' && !B2')


où « || » désigne un opérateur OU, « && » désigne un opérateur ET et « ! » désigne la négation logique,
A1 à B2 étant les éléments d'image source disposés en forme de matrice, dont la position dans la colonne est indiquée par des majuscules et dont la position sur la ligne à l'intérieur de la matrice est indiquée par des chiffres,
a1 à c3 étant les éléments d'image cible également disposés en forme de matrice, dont la position dans la colonne est indiquée par des minuscules et dont la position sur la ligne à l'intérieur de la matrice est indiquée par des chiffres,

et la donnée-image associée à un élément d'image (12, 26) étant désignée par la position dans la colonne et la position sur la ligne de celui-ci et par un trait vertical.

8. Procédé selon l'une des revendications précédentes, **caractérisé en ce qu'**au moins des lignes diagonales (122, 124) de la largeur d'un élément d'image source sont représentées dans l'image cible en tant que disposition diagonale (122', 124') de points d'image où les éléments d'image cible adhèrent le long de la direction diagonale.

9. Ensemble de circuit pour le traitement de données-image, notamment dans une imprimante, comprenant une unité de préparation (50) pour la sélection de données-image sources qui définissent la représentation d'éléments d'image source disposés en forme de matrice d'une image source (10, 10'),

où respectivement un nombre prédéterminé de données-image sources est sélectionné pour des images source partielles (18) disposées en forme de matrice dans l'image source (10, 10'),

et comprenant une unité de conversion (60, 260) pour générer des données-image cibles pour définir la représentation d'éléments d'image cible disposés en forme de matrice dans une image partielle cible (22) à partir de données-image source sélectionnées,

le nombre de données-image sources par image source partielle (18) et le nombre de données-image cibles par image cible partielle (22) étant différents,

l'image cible partielle (22) respective étant disposée dans l'image cible (14, 14') à une position qui correspond à la position de l'image source partielle (18) associée dans l'image source (10, 10'),

l'imagé source (10, 10') ayant une première résolution définie selon une trame source et l'image cible (14, 14') ayant une deuxième résolution différente de la première résolution d'un facteur de conversion selon une trame cible, et

la conversion étant réalisée en ce qu'une ligne (102', 104') d'une largeur de ligne à nombres non entiers est représentée dans la trame cible en l'éclaircissant dans la trame cible.

10. Ensemble de circuit selon la revendication 9, **caractérisé par** une unité d'édition, de préférence une unité d'imprimante pour une résolution fixée d'avance,

l'unité d'édition éditant une image cible (14, 14') dans laquelle une image cible partielle (22) respective est disposée à une position dans l'image cible (14, 14') qui correspond à la position de l'image source partielle associée (18) dans l'image source (10, 10').

11. Imprimante comprenant un ensemble de circuit pour le traitement de données-image selon la revendication 9 ou 10.

**Figur 1**

240 dpi                    600 dpi

Figur 2

Figur 3

240 dpi

600 dpi

Figur 4

240 dpi

600 dpi

$C3 = A1\grave{} \&\& B1\grave{} \&\& A2\grave{} \&\& B2\grave{}$

$C3 = A1\grave{}//B1\grave{}//A2\grave{}//B2\grave{}$

b)

Figur 5

## 240 dpi

## 600 dpi

**Figur 6**

## 240 dpi

## 600 dpi

**Figur 7**

400 dpi  ~202

600 dpi

Figur 8

**Figur 9**

**Figur 10**

400 dpi

600 dpi

300` 300

302` 302

## Figur 11

400 dpi

600 dpi

312`

312

b)

310` 310

## Figur 12